# EUROPÄISCHE PATENTSCHRIFT

(11) **EP 2 792 227 B1**
(45) Veröffentlichungstag und Bekanntmachung des Hinweises auf die Patenterteilung: **15.08.2018**
(21) Anmeldenummer: 14164409.6
(22) Anmeldetag: 11.04.2014
(51) Int. Cl.: A01G 20/12

(54) **Füllmaterialentleerungs- und Aufrollvorrichtung für gebrauchte Kunstrasenplätze**
Filler material emptying and rolling device for used artificial turf areas
Dispositif d'enroulement et de vidange de matériau de remplissage pour des espaces de gazons artificiels usagés

(30) Priorität: 15.04.2013 DE 202013101597 U; 22.08.2013 DE 202013103799 U; 18.10.2013 DE 202013009251 U
(43) Veröffentlichungstag der Anmeldung: 22.10.2014
(73) Patentinhaber: SMG Sportplatzmaschinenbau GmbH, 89269 Vöhringen (DE)
(72) Erfinder: Owegeser, Johann, 89189 Illerrieden (DE)
(74) Vertreter: Pfister, Stefan Helmut Ulrich

(56) Entgegenhaltungen:
- EP-A1- 2 387 875
- WO-A1-2010/094576
- WO-A1-2012/142610
- WO-A1-2013/042816
- US-A1- 2010 319 510
- US-A1- 2012 006 930

## Beschreibung

Die Erfindung betrifft eine Vorrichtung zum Entfernen von Füllmaterial aus einem streifenförmigen Bandmaterial, insbesondere aus einem Kunstrasen. Entsprechende Vorrichtungen sind bereits aus dem Stand der Technik bekannt und werden insbesondere für die vorbeugende Instandhaltung von Kunstrasenfeldern, deren Verlegung oder deren Entfernung eingesetzt. Dabei werden auch Rasenflächen abgenommen und für das Recycling oder eine Wiederverwertung aufgerollt. Um dies zu ermöglichen, wird Sand aus dem Feld entfernt, der für den weiteren Gebrauch in sogenannten Big Bags gelagert wird. Dies gilt nicht anders für eine Kunststoffverfüllung, ebenfalls in Big Bags für das Recycling gelagert wird.

Das Dokument WO 2012/142610 A1 offenbart ein motorisiertes Fahrzeug, welches dazu ausgebildet ist, dass eine Aufnahmevorrichtung für Rasenfüllmaterial darin angebracht wird. Das Füllmaterial wird dabei mittels eines Förderbands in einen Sack befördert, welcher sich in einem Anhänger befindet.

Das Dokument US 2010/319510 A1 offenbart eine Aufnahmevorrichtung für Füllmaterial, welche dazu ausgebildet ist, das Füllmaterial aufzutrennen und zu reinigen.

Das Dokument US 2012/006930 A1 offenbart eine Vorrichtung zum Aufnehmen und Auftrennen von Füllmaterial.

Das Dokument EP 2387875 A1 offenbart ein Gerät zum Entfernen von Füllmaterial, welches dazu ausgebildet ist, Füllmaterial in unterschiedlichen Schichten zu entfernen.

Das Dokument WO 2013/042816 A1 offenbart eine Vorrichtung zum Recyclen von Kunstrasen mit faserartigem Material, welche dazu ausgebildet ist, den Kunstrasen von Füllmaterial zu trennen.

Das Dokument WO 2010/094576 A1 offenbart ein Verfahren und eine Vorrichtung zum Aufnehmen von Füllmaterial auf einem Feld, wobei das Füllmaterial aufgenommen und kontinuierlich in Streifen geschnitten wird.

Es ist Aufgabe der vorliegenden Erfindung, eine Vorrichtung zum Entfernen von Füllmaterial aus einem streifenförmigen Bandmaterial, insbesondere aus einem Kunstrasen, zur Verfügung zu stellen, die eine besonders zuverlässige Trennung von Füllmaterial und Bandmaterial gewährleistet und die zudem einfach aufgebaut, flexibel einsetzbar und kostengünstig herstellbar ist.

Diese Aufgabe wird durch eine Vorrichtung zum Entfernen von Füllmaterial aus einem streifenförmigen Bandmaterial gelöst, die ein Transportsystem zum Fördern des Bandmaterials vorsieht, das wenigstens ein Transportmittel und ein Umlenkmittel zum Aufweiten und Umschlagen des Bandmaterials umfasst, so dass das Füllmaterial aus dem Bandmaterial herausfallen kann. Die Vorrichtung umfasst weiterhin ein Entleerungsmittel für das Bandmaterial, das in einem Bereich des umgeschlagenen Bandmaterials angeordnet ist. Darüber hinaus ist wenigstens eine Andruckwalze vorgesehen, die räumlich gesehen unterhalb des Transportsystems angeordnet ist.

Das Umlenkmittel umfasst wenigstens eine Umlenkwalze. Erfindungsgemäß ist vorgesehen, dass die wenigstens eine Umlenkwalze und/oder Andruckwalze ein rotatorisch antreibbares Traggestell für mehrere daran gelagerte Klopfwalzen umfasst.

Eine bevorzugte Ausführungsform der Vorrichtung sieht vor, dass das Umlenkmittel als Teil des Transportsystems, insbesondere als Transportmittel ausgebildet ist. Bei dem umlenken Mittel kann es sich beispielsweise um eine Rolle, Walze oder Welle bzw. eine Achse handeln, die dazu dient eine Transportband oder dergleichen zu führen und dessen Richtung zu ändern. Eine Umlenkung kann dabei um bis zu 180° erfolgen, so dass das durch das Umlenkmittel richtungsgeänderte Transportelement der Vorrichtung in eine zu einer ersten Transportrichtung entgegengesetzte Transportrichtung geführt wird.

In einer weiteren Ausführungsform der Vorrichtung ist vorgesehen, dass zwischen der wenigsten einen Andruckwalze und dem Transportsystem und/oder dem Umlenkmittel ein Spalt zur Führung des Bandmaterials, insbesondere zu dessen reibschlüssiger Förderung vorgesehen ist. Eine reibschlüssige Förderung ist hierbei als Förderung zu verstehen, bei der auf beiden Seiten des Bandmaterials Transportmittel bzw. Andruckwalzen anliegen und in der Lage sind, allein aufgrund der zwischen dem Bandmaterial und den Transportmitteln bzw. Andruckwalzen bestehenden Reibung eine lineare Fortbewegung des Bandmaterials zu erreichen. Das Bandmaterial liegt dabei sowohl an dem Transportsystem bzw. einem Element des Transportsystems, z.B. dem Transportmittel und der Andruckwalze an oder sich stützt sich dort ab. Neben der Führung des Bandmaterial wird dabei auch dessen Bewegung in der Vorrichtung sichergestellt, so dass eine kontinuierliche Förderung des Bandmaterials durch die für Vorrichtung und eine nahezu vollständige Entleerung des Bandmaterials bzw. des dort vorgesehenen überschüssigen Füll- oder Einstreumaterials, wie beispielsweise Sand und/oder sämtlicher sonstiger für die Verfüllung von Kunstrasenplätzen vorgesehenen und geeigneten Materialien erfolgen kann.

Eine Weiterbildung der Vorrichtung sieht vor, dass das Transportsystem das Entleerungsmittel oder wenigstens eine Andruckwalze überdeckt bzw. sich in Förderrichtung über diese erstreckt. Durch diese Ausgestaltung wird eine besonders kompakte Bauart ermöglicht. Dies bringe insbesondere dann Vorteile mit sich, wenn auf kleineren Plätzen gearbeitet wird bzw. nur wenig Raum für die Lagerung der Vorrichtung zur Verfügung steht. Insgesamt kompaktere Vorrichtung lässt sich zu dem einfacher transportieren, wenn vorgesehen ist die Vorrichtung als Anhängevorrichtung auszuführen.

Unter Entleerungsmittel zu verstehen ist eine Anordnung einer oder mehrerer auf das Bandmaterial einwirkender Vorrichtungsteile, wie beispielsweise Walzen, Klopfwalzen, Andruckwalzen oder sonstige zum Eingriff bzw. Angriff an dem Bandmaterial geeignete Elemente. Bestimmend ist dabei, dass das Entleerungsmittel in der Lage ist das Bandmaterial derart zu behandeln, dass das Füll- bzw. Einstreumaterial aus dem Bandmaterial entfernt wird. Als Entleerungsmittel angesehen werden können beispielsweise auch Bürsten oder Zahnräder bzw. Stachel- oder Zahnwalzen, die eine Beaufschlagung des oder einen Eingriff in das Bandmaterials durchführen, um das Füllmaterial dazu zu bewegen, aus dem Bandmaterial herauszufallen, aus diesem herausgeschlagen, herausgekämmt oder herausgebürstet oder in sonstiger Art und Weise aus dem Bandmaterial entnommen zu werden. Als Entleerungsmitteln können aber auch Schlägel oder Besen, beispielsweise rotierende Besen oder rotierende Besen vorgesehen werden.

Ein wesentlicher Punkt der erfindungsgemäßen Vorrichtung besteht dabei darin, dass die spezifische Anordnung der einzelnen Funktionselemente eine besonders zuverlässige Führung des Bandmaterials durch die Vorrichtung, insbesondere durch deren Umlenk- und Entleerungsmittel, sicherstellt. Der Bereich des umgeschlagenen Bandmaterials soll dabei so verstanden sein, dass dieser, in Förderrichtung des Bandmaterials gesehen, an dem Punkt beginnt, an dem das Bandmaterial erstmals aus seiner ebenen Förderlage am Transportmittel in eine davon abweichende, umgeschlagene Lage ausgerichtet wird. Gerade beim Umschlagen des Bandmaterials und seiner zum Beispiel klopfenden Entleerung kommt es dabei entscheidend auf seine zuverlässige Führung an, um das Bandmaterial nicht in der Vorrichtung zu verklemmen und damit seinen stetigen Weitertransport zu blockieren. Die Andruckwalze wirkt dabei so mit dem Transportmittel zusammen, dass deren Fördergeschwindigkeit aufeinander abgestimmt ist, und das Bandmaterial sich nicht dazwischen aufstauen kann. Da die Andruckwalze zudem unterhalb von dem Transportmittel angeordnet ist, ist eine besonders einfache Entfernung des Füllmaterials in den darunter liegenden, freien Raum möglich. Dadurch wird insbesondere der Aufbau der Vorrichtung deutlich vereinfacht, was den zum Beispiel seitlichen Abtransport des Füllmaterials anbetrifft.

Als Transportmittel Zusammenhang mit der vorliegenden Erfindung zu verstehen ist ein Mittel bzw. eine Anordnung von Elementen, die einen kontinuierlichen Transport des Bandmaterials gewährleisten. Es kann sich hierbei beispielsweise um eine Anordnung mehrerer Walzen oder Rollen handeln, über die das Bandmaterial geführt wird. Ebenfalls als Transportmittel zu verstehen ist eine Transportbahn, ein Transportgurt oder ein aus mehreren Gliedern bestehendes, eine Längserstreckung aufweisendes Band, eine Förder- oder Schleppkette oder ein Gliederband. Das Transportmittel umfasst dabei in der Regel wenigstens einen Antrieb, der den linearen Vorschub der Elemente des Transportmittels gewährleistet. Durch geeignete Umlenkmittel kann ein Endlosband oder dergleichen eingesetzt oder vorgesehen werden, auf dem das Bandmaterial geführt bzw. durch das Bandmaterial gezogen, geschleppt oder transportiert wird.

Vorteilhafte Ausführungsformen der erfindungsgemäßen Vorrichtung sind in den Unteransprüchen angegeben.

Die Merkmale der in den einzelnen Unteransprüchen angegebenen Ausführungsformen sowie Teile davon können selbstverständlich mit der im Hauptanspruch definierten Vorrichtung einzeln oder in Gruppen kombiniert werden. Hierdurch wird die Vorrichtung vorteilhaft weitergebildet. Ebenfalls möglich ist die Kombination einzelner Merkmale aus verschiedenen Unteransprüchen miteinander bzw. mit den Merkmalen des Hauptanspruches. Auch diese Varianten sind von der Erfindung umfasst.

In einer ersten bevorzugten Ausführungsform der erfindungsgemäßen Vorrichtung ist vorgesehen, dass die wenigstens eine Andruckwalze derart mit dem wenigstens einen Transportmittel des Transportsystems und/oder dem Umlenkmittel zusammenzuwirken vermag, dass das Bandmaterial zwischen Transportmittel und Andruckwalze und/oder Umlenkmittel und Andruckwalze zumindest reibschlüssig förderbar ist. Dadurch wird eine besonders richtungsstabile und zuverlässige Förderung des Bandmaterials sichergestellt, bei der zudem auch stark und/oder unterschiedlich mit Füllmaterial beladene Bandmaterialien rutschfrei transportiert werden können.

In einer weiteren bevorzugten Ausführungsform der erfindungsgemäßen Vorrichtung ist es vorgesehen, dass das Entleerungsmittel wenigstens eine Andruckwalze zum Spannen des Bandmaterials umfasst. Die Andruckwalze muss dabei nicht notwendigerweise eine geschlossene Mantelfläche aufweisen, entscheidend ist vielmehr zunächst, dass diese ein potentielles Aufstauen des Bandmaterials durch Spannen verhindert und gleichzeitig den Flor insbesondere eines Kunstrasens aufweitet, um das Entfernen von Füllmaterial zu erleichtern.

Die erfindungsgemäße Vorrichtung bleibt nicht auf die Verwendung mit Kunstrasen beziehen sollte Kunstrasenplätzen beschränkt. Besteht es verständlich auch die Möglichkeit, dass er hierdurch jegliche Art von Sportplatzbelägen oder sonstigen Belegen aufgenommen werden. Die Erfindung eignet sich beispielsweise auch für die Entfernung von in den abgetragen Sportplatzbelägen bzw. sonstigen Belegen enthaltenem Schmutz, Staub oder sonstigen Verunreinigungen.

In einer weiteren vorteilhaften Ausführungsform der erfindungsgemäßen Vorrichtung ist es vorgesehen, dass das Entleerungsmittel wenigstens eine Klopfwalze zum Ausklopfen des Bandmaterials umfasst. Zwar wird ein entsprechend umgeschlagenes Bandmaterial wie ein Kunstrasen schon durch seine Umkehrung wenigstens teilweise entleert, da das Füllmaterial nach unten herausfallen kann. Die Entleerungseffizienz lässt sich aber deutlich steigern, wenn eine zusätzliche mechanische Behandlung des Bandmaterials vorgenommen wird, wie sie mit einer Klopfwalze vorgesehen ist. Diese kann im Querschnitt, je nach Anforderung, ein mehrkantiges Profil aufweisen, um die nach unten ausgerichtete Oberfläche des Bandmaterials periodisch aufzudehnen und in Schwingung zu versetzen. Damit lässt sich eine besonders gute Wirkung des Entfernungsvorgangs erzielen. Zwar kann die Andruckwalze auch Teil des Transportmittels oder des Umlenkmittels sein, es ist aber bevorzugt, dass diese als Teil des Entleerungsmittels ausgebildet und angeordnet ist. Denn gerade in dem Entleerungsmittel treten die höchsten Schwingungen auf, die eine zuverlässige Führung des Bandmaterials beeinträchtigen könnten. Die Andruckwalze kann in Förderrichtung des Bandmaterials auf Höhe des Umlenkmittels oder nach dem Umlenkmittel angeordnet sein, was unterschiedliche konstruktive Auslegungsvarianten der Vorrichtung zulässt. Bevorzugt ist es auch, dass mehrere Andruckwalzen vorgesehen sind, deren Rotationsgeschwindigkeit zueinander und/oder gemeinsam steuerbar ist. Dadurch lässt sich eine besonders gute Abstimmung zwischen den Förderkomponenten erzielen, um eine zuverlässige Führung des Bandmaterials durch die Vorrichtung hindurch zu gewährleisten und insbesondere dessen potentielles Aufstauen zu verhindern.

Die Klopfwalzen können ersetzt oder ergänzt werden durch Achsen oder Wellen, an denen bewegliche Schlägel angeordnet sind, die bei Drehung periodisch auf das Bandmaterial auftreffen und hieraus das Füllmaterial ausklopfen. Ebenfalls denkbar sind Walzen, das heißt zylindrische, drehbare Elemente, die an ihrer Oberfläche Aufwölbungen bzw. Vorsprünge tragen, die in unregelmäßigen Abständen auf dem Zylinder verteilt sind und bei Rotation der Walzen bzw. Zylinder auf das Bandmaterial auftreffen.

In einer weiteren vorteilhaften Ausführungsform der erfindungsgemäßen Vorrichtung ist vorgesehen, dass das Entleerungsmittel zwei jeweils für das Fördern des Bandmaterials mit dem Untertrum des Transportmittel(s) zusammenwirkende Andruckwalzen mit einer dazwischen angeordneten Klopfwalze umfasst. Das Bandmaterial ist S-förmig oder wellenartig über die Andruckwalzen und die Klopfwalze (auf der Unterseite des Transportmittels) geführt. Dadurch lässt sich eine weiter verbesserte Wirkung der Entleerung durch Spannen des Bandmaterials im Angriffspunkt der Klopfwalze erzielen. Bevorzugt ist die Klopfwalze dabei so angeordnet, dass das Bandmaterial wellen- oder mäanderförmig über die Andruckwalzen hinweg und durch die Vorrichtung hindurch führbar ist. Zu dem vorstehend erläuterten Spannen des Bandmaterials wird dieses zusätzlich aufgeweitet, so dass das Füllmaterial noch leichter herausgetrennt werden kann. Zudem wird das Bandmaterial gegen eine Mantelfläche der Klopfwalze gedrückt, so dass diese das Bandmaterial effizienter bearbeiten kann.

In einer erfindungsgemäßen Variante ist zumindest eine Andruckwalze etwas vom Untertrum des Transportmittels entfernt, d.h. die Andruckwalze weist einen Abstand zum Untertrum auf, wodurch noch eine zuverlässige Führung des Bandmaterials über die Klopfwalze, aber in diesem Bereich kein Spannen des Bandmaterials mehr erfolgt.

In einer weiteren vorteilhaften Ausführungsform der erfindungsgemäßen Vorrichtung ist es zudem vorgesehen, dass die wenigstens eine Andruckwalze eine Mantelfläche mit Vorsprüngen wie bspw. Zähne, Zacken oder Zinken zum Eingreifen in ein Bandmaterial aufweist. Dadurch wird die Führung des Bandmaterials deutlich verbessert und dieses zudem aufgelockert, so dass auch dadurch eine leichtere Entfernung des Füllmaterials möglich wird. Bevorzugt ist auch, dass die wenigstens eine Andruckwalze eine Drehwelle mit mindestens einem daran angebrachten Sternrad umfasst. Eine solche Andruckwalze verfügt dabei über keine durchgehend geschlossene Mantelfläche, ist aber nicht weniger effizient und zudem einfach und gewichtssparend aufgebaut. Besonders bevorzugt ist es dabei, dass das wenigstens eine Sternrad schräg ausgerichtet zu der Drehwelle an dieser befestigt ist. Dadurch nimmt die Andruckwalze nicht nur eine Führungs- und Spannfunktion wahr, sondern bewirkt durch ihre taumelnde Bewegung bei Drehung der Welle ein Walken des Bandmaterials, das ebenfalls eine deutlich verbesserte Entfernung von Füllmaterial aus dem Bandmaterial bewirkt.

In einer weiteren bevorzugten Ausführungsform der erfindungsgemäßen Vorrichtung ist es auch vorgesehen, dass das Umlenkmittel wenigstens eine Klopfwalze umfasst, über die das Bandmaterial führbar ist. Die Wirkung einer solchen Klopfwalze wird deutlich erhöht, weil diese im Umlenkbereich und damit im aufgeweiteten Zustand des Bandmaterials angreift, indem das Füllmaterial besonders leicht aus dem Bandmaterial heraus zu trennen ist. Aus Gründen einer einfachen konstruktiven Gestaltung der erfindungsgemäßen Vorrichtung ist es dabei bevorzugt, dass das Umlenkmittel zumindest teilweise von einer Umlenkwalze des Transportmittels gebildet ist. Die Klopfwalzen weisen besonders bevorzugt eine individuell oder gruppenweise unterschiedliche Klopffrequenz auf. Damit wird eine spezifische Abstimmung auf die jeweilige Position des Bandmaterials und dessen an dieser Position vorzunehmende Bearbeitungsintensität möglich. Im Umlenkbereich kann so das Füllmaterial zunächst vorgelockert werden, bevor es in einem nachfolgenden Bearbeitungsschritt herausgeklopft wird und erst danach verbleibende Reste einer besonders intensiven Bearbeitung unterliegen.

In einer weiteren bevorzugten Ausführungsform der erfindungsgemäßen Vorrichtung ist das wenigstens eine Transportmittel des Transportsystems als eines oder als mehrere umlaufende Transportbänder ausgebildet. Mehrere Transportbänder können dabei in Förderrichtung gesehen hintereinander angeordnet sein. Alternativ oder in Kombination ist es aber auch möglich, dass das wenigstens eine Transportmittel des Transportsystems als wenigstens eine, aus einer Mehrzahl von zueinander beabstandeten, parallel angeordneten Transportgurten aufweisende Transportgutanordnung ausgebildet ist. Auch dadurch wird eine besonders zuverlässige Förderung des Bandmaterials gewährleistet. Bevorzugt ist es auch, dass ein Ober- und Untertrum des Transportmittels dem Transport des Bandmaterials dient.

In einer weiteren bevorzugten Ausführungsform der erfindungsgemäßen Vorrichtung ist ein Fördermittel zum Abtransportieren von getrenntem Füllmaterial vorgesehen, um dieses zuverlässig aus der Vorrichtung auszuwerfen, abzutransportieren und/oder zu lagern. Dadurch wird ein ununterbrochener Betrieb der Vorrichtung möglich, der auch nicht notwendigerweise einen Speicher erfordert. Das Fördermittel umfasst dabei in bevorzugter Weise ein um 180 Grad schwenkbares Förderband, so dass eine flexible Aufnahme des aus dem Bandmaterial entfernten Füllmaterials, zum Beispiel vor oder hinter der Vorrichtung, ermöglicht wird.

In einer weiteren bevorzugten Ausführungsform der erfindungsgemäßen Vorrichtung ist zudem ein Verarbeitungsmittel zum Aufrollen, zum Häckseln oder zum Wiederauslegen des vom Füllmaterial freien Bandmaterials vorgesehen. Die Vorrichtung kann damit, je nach spezifischer Anforderung, flexibel eingesetzt werden, insbesondere, wenn das Verarbeitungsmittel abhängig vom gewünschten Vorgang an der Vorrichtung austauschbar ist.

In einer weiteren bevorzugten Ausführungsform der erfindungsgemäßen Vorrichtung ist auch ein Schneidmittel, bspw. ein Messer, eine Säge, eine Schneidscheibe, Schere oder dergleichen zum Zuschneiden des mit Füllmaterial belasteten Bandmaterials vorgesehen, so dass das an dem am Boden ausgelegte Bandmaterial keinerlei Vorbehandlung durchgeführt werden muss, bevor die Vorrichtung eingesetzt wird. Die Vorrichtung erlaubt damit einen hohen Automatisierungsgrad, der sie leicht handhaben lässt. Ein darüber hinaus gehender, völlig autonomer Einsatz ohne zusätzliches (Schlepp-)Gerät ist dann möglich, wenn die Vorrichtung als selbstfahrendes Gerät ausgelegt ist. Es kann aber auch bevorzugt sein, diese als geschlepptes Gerät auszulegen, wenn dies die Umstände erfordern, insbesondere wenn dies aus Kosten oder Gewichtsgründen notwendig sein sollte. Ein besonders hoher Automatisierungsgrad in Kombination mit einer hohen Bearbeitungsqualität des Bandmaterials wird dann erreicht, wenn die Vorrichtung mit einer sensorbasierten automatischen Steuerung ausgestattet ist. Dies ist bevorzugt dann der Fall, wenn größere Flächen ausgelegten Bandmaterials zu verarbeiten und/oder von klar detektierbaren Eingrenzungen umgeben sind.

In einer weiteren bevorzugten Ausführungsform der erfindungsgemäßen Vorrichtung ist es zudem vorgesehen, dass die Vorrichtung eine Portalbrücke aufweist, welche den Einlaufbereich der Vorrichtung überspannt, wobei sich der Einlaufbereich in Förderrichtung des Bandmaterials vor dem Umlenkmittel befindet, und die Portalbrücke einen Antriebsmotor der Vorrichtung trägt. Durch den mittig und oben liegenden Antriebsmotor wird zum einen der darunter liegende Bearbeitungsverlauf des Bandmaterials nicht gestört, zum anderen erhält die Vorrichtung eine Schwerpunktslage, bei der sie zum einen leicht manövrierbar und zum anderen so stabilisiert ist, dass bei hohem Durchsatz von Bandmaterial ein zuverlässiger Betrieb sichergestellt ist.

In einer weiteren bevorzugten Ausführungsform der erfindungsgemäßen Vorrichtung ist es auch vorgesehen, dass das Umlenkmittel als ein Teil des Transportsystems, insbesondere als Transportmittel ausgebildet ist. Damit kommt dem Umlenkmittel eine Doppelfunktion zu, die eine deutliche Vereinfachung des konstruktiven Aufbaus der Vorrichtung erlaubt. Denn das Umlenkmittel dient in diesem Fall nach wie vor dem Umlenken des Bandmaterials, gleichsam aber auch seinem Transport. In der Folge entsteht eine besonders kompakte Ausführung der Vorrichtung, mit einer hohen Funktionsintegration durch gleichzeitiges Fördern und Umlenken des Bandmaterials mit nur einer einzigen Komponente. Das Umlenkmittel kann dabei in bevorzugterweise wenigstens eine Umlenkwalze umfassen, die insbesonderer Weise mit wenigstens einer Klopfwalze ausgestattet ist. Dies führt zu einer weiteren Funktionsverdichtung auf die Umlenkwalze, die eine noch einfacherere, gewichtsreduzierte und zudem kostengünstigerere Konstruktion der Vorrichtung ermöglicht. Denn insbesondere eine Umlenkwalze, die mit wenigstens einer Klopfwalze ausgestattet ist, lässt neben dem Umlenken und Transportieren des Bandmaterials auch dessen deutlich verbesserte Entleerung bereits im Bereich der Aufweitung des Bandmaterials zu.

In einer noch weiteren bevorzugten Ausführungsform der erfindungsgemäßen Vorrichtung ist es darüber hinaus vorgesehen, dass das Entleerungsmittel wenigstens eine Andruckwalze umfasst, die insbesondere mit wenigstens einer Klopfwalze ausgestattet ist. Damit kommt auch der Andruckwalze eine verbesserte Entleerungswirkung durch Andrücken und Klopfen des Bandmaterials zu, die ebenfalls eine einfacherere, gewichtsreduzierte und zugleich kostengünstigere Konstruktion durch Funktionsverdichtung auf dieser Andruckwalze zulässt. Denn eine solche Andruckwalze dient damit nicht nur dem Transport, dem Aufweiten und bedarfsweisen Ausrichten des Bandmaterials im Entleerungsbereich, sondern in dieser spezifischen Ausführungsform auch dessen effektiveren Entleerung. Um ein leichtes Einfädeln des Bandmaterials zu ermöglichen, kann dabei in einem Bereich zwischen dem Umlenkmittel und einer ersten Andruckwalze eine weitere, zweite Andruckwalze zum Einfädeln des Bandmaterials zwischen dem Umlenkmittel und der ersten Andruckwalze angeordnet sein. Ein solchermaßen einfaches Einfädeln des Bandmaterials kann zudem dadurch unterstützt werden, dass ein Leitblech zum Zuführen des Bandmaterials in einen Spalt zwischen der Umlenkwalze und der weiteren Andruckwalze vorgesehen ist.

In einer bevorzugten Ausführungsform der erfindungsgemäßen Vorrichtung ist es auch vorgesehen, dass die wenigstens eine Umlenkwalze und/oder Andruckwalze ein rotatorisch antreibbares Traggestell für mehrere wiederum rotatorisch antreibbar daran gelagerte Klopfwalzen umfasst. Dadurch wird eine verbesserte Entleerung des Bandmaterials durch zum einen das rotierende Traggestell und zum anderen durch die daran gelagerten Klopfwalzen deutlich gefördert. Diese verbesserte Entleerungswirkung erfordert dabei keine weiteren Bauteile oder Baugruppen, sondern lässt sich in den bereits vorhandenen Funktionselementen, wie der wenigstens einen Umlenkwalze und/oder Andruckwalze realisieren. Insofern stellt auch diese Ausführungsform der erfindungsgemäßen Vorrichtung eine Funktionsverdichtung auf die Umlenkwalze und/oder Andruckwalze dar, die mit einer gleichzeitigen Effizienzerhöhung einhergeht. Obwohl die Klopfwalzen beliebig an dem Traggestell anordenbar sind, hat es sich als eine konstruktiv besonders einfache und wirkungsvolle Lösung herausgestellt, wenn diese parallel zur Rotationsachse des Traggestells ausgerichtet sind. Bevorzugt weisen die Klopfwalzen auch einen in Richtung ihrer Rotationsachse gesehen unrunden, insbesondere kreuzförmigen, rechteckigen oder quadratischen Querschnitt auf. Denkbar sind aber auch andere ein- oder mehreckige, insbesondere im Querschnitt dreieckige Rotationsachsen der Klopfwalzen. Grundsätzlich könnte das Klopfen natürlich auch durch entsprechende Noppenbildung oder ähnliches an der Klopfwalze bewirkt werden, allerdings hat sich der unrunde, insbesondere kreuzförmige Querschnitt einer Klopfwalze als konstruktiv besonders einfach herstellbar und zugleich besonders wirkungsvoll erwiesen.

In einer weiteren vorteilhaften Ausführungsform der erfindungsgemäßen Vorrichtung ist es schließlich vorgesehen, dass das Entleerungsmittel zwei jeweils für das Fördern des Bandmaterials mit dem Umlenkmittel zusammenwirkende Andruckwalzen umfasst, die so angeordnet und dimensioniert sind, dass das Bandmaterial mäanderförmig zwischen dem Umlenkmittel und den zwei Andruckwalzen förderbar ist. Dadurch entsteht insbesondere der Vorteil einer richtungsstabilen und zuverlässigen, sowie rutschfreien Förderung auch unterschiedlich stark beladener Bandmaterialien, bei der ein Flor zugleich abwechselnd aufgeweitet und wieder geschlossen wird, so dass das Füllmaterial besonders leicht daraus herausfallen kann. Sollte das Umlenkmittel und/oder die Andruckwalzen zudem als Klopfwalten ausgebildet sind oder diese auf irgendeine andere Art und Weise umfassen, ist eine besonders effiziente Entleerung des Bandmaterials gewährleistet.

Die vorstehend genannte Aufgabe der vorliegenden Erfindung wird zudem durch eine Vorrichtung zum Entfernen von Füllmaterial aus einem streifenförmigen Bandmaterial gelöst, die ein Transportsystem zum Fördern des Bandmaterials vorsieht, das wenigstens ein Transportmittel umfasst, welches mit einem Umlenkmittel zum Aufweiten und Umschlagen des Bandmaterials versehen ist, sodass das Füllmaterial aus dem Bandmaterial herausfallen kann. Die Vorrichtung umfasst weiterhin ein Entleerungsmittel für das Bandmaterial, das in einem Bereich des umgeschlagenen Bandmaterials angeordnet ist. Darüber hinaus ist wenigstens eine Andruckwalze vorgesehen, die räumlich gesehen unterhalb von dem das Umlenkmittel aufweisenden Transportmittel des Transportsystems angeordnet ist.

Ein wesentlicher Punkt dieser erfindungsgemäßen Vorrichtung besteht dabei in einer besonders hohen Funktionsverdichtung auf das Umlenkmittel, das sowohl zum Umlenken, wie auch Transportieren beziehungsweise Fördern des Bandmaterials, als auch zu dessen Entleerung eingesetzt wird. Dadurch lässt sich die erfindungsgemäße Vorrichtung konstruktiv besonders einfach aufbauen, deren Gewicht gleichzeitig reduzieren und damit die Kosten senken sowie in der Folge auch potentiell anfallende Wartungs- und/oder Reparaturleistungen minimieren.

Die vorstehend genannte Aufgabe der vorliegenden Erfindung wird zudem durch eine Vorrichtung zum Entfernen von Füllmaterial aus einem streifenförmigen Bandmaterial gelöst, die ein Transportsystem zum Fördern des Bandmaterials aufweist, das wenigstens ein Transportmittel und ein Umlenkmittel zum Aufweiten und Umschlagen des Bandmaterials umfasst, so dass das Füllmaterial aus dem Bandmaterial herausfallen kann. Es ist weiterhin ein Entleerungsmittel für das Bandmaterial vorgesehen, das in einem Bereich des umgeschlagenen Bandmaterials angeordnet ist, und wenigstens eine Andruckwalze, die räumlich gesehen unterhalb von dem Transportmittel des Transportsystems angeordnet ist. Das Entleerungsmittel umfasst dabei zwei jeweils für das Fördern des Bandmaterials mit dem Umlenkmittel zusammenwirkende Andruckwalzen, die so angeordnet und dimensioniert sind, dass das Bandmaterial mäanderförmig zwischen dem Umlenkmittel und den zwei Andruckwalzen förderbar ist.

Ein wesentlicher Punkt dieser erfindungsgemäßen Vorrichtung besteht dabei ebenfalls in einer besonders hohen Funktionsverdichtung auf das Umlenkmittel, das sowohl zum Umlenken, wie auch Transportieren beziehungsweise Fördern des Bandmaterials, als auch zu dessen Entleerung eingesetzt wird. Dadurch lässt sich die erfindungsgemäße Vorrichtung konstruktiv besonders einfach aufbauen, deren Gewicht gleichzeitig reduzieren und damit die Kosten senken sowie in der Folge auch potentiell anfallende Wartungs- und/oder Reparaturleistungen minimieren. Gleichzeitig wird eine besonders richtungsstabile und zuverlässige, sowie rutschfreie Förderung auch unterschiedlich stark beladener Bandmaterialien gewährleistet, bei der ein Flor zugleich abwechselnd aufgeweitet und wieder geschlossen wird, so dass das Füllmaterial besonders leicht daraus herausfallen kann. Sollte das Umlenkmittel und/oder die Andruckwalzen zudem als Klopfwalten ausgebildet sind oder diese auf irgendeine andere Art und Weise umfassen, ist eine besonders effiziente Entleerung des Bandmaterials gewährleistet.

Mit der erfindungsgemäßen Vorrichtung kann damit eine vollständig automatisierte Aufnahme eines streifenförmigen Bandmaterials, wie eines Kunstrasens, von einem Grundstück vorgenommen werden. Die Schneideinrichtung sorgt dabei für eine exakte Abtrennung der zu entfernenden Rasenbahn, welche durch den gesamten Arbeitsprozess der Vorrichtung ohne zusätzliche Hilfsmittel oder manuelle Eingriffe durchgeführt wird. Dabei ist eine vollständige Entfernung des Einfüllmaterials, zum Beispiel durch die unterschiedlichen Frequenzen der Klopfwalzen, und dessen Abtransport aus der Vorrichtung, zum Beispiel mit einem Förderband möglich. Das Förderband kann dabei um 180 Grad schwenkbar sein, um eine Beladung von Transportgerät, wie einem Motor-Dumper, einem Radlader, einem LKW oder einer Big-Bag-Befülleinrichtung, vorzunehmen.

Bauartbedingte Vorteile der Vorrichtung sind dabei ihr geringes Gewicht und die kompakte Ausführung mit einem Eigenantrieb, wie einem Dieselmotor und/oder einer Hydrauliksteuerung. Bei einem Einsatz auf einem Kunstrasenfeld kann die komplette Rasenfläche mit der Vorrichtung aufgenommen und entfernt werden. Das geringe Gewicht und die ausgewogene Gewichtsverteilung sowie eine großdimensionierte Bereifung erlauben dabei eine schonende Befahrung des verbleibenden Unterbaus. Für das exakte und gerade Entfernen der Rasenbahnen kann dabei eine sensorische automatische Geradeaussteuerung der Maschine vorgesehen sein.

In den Zeichnungen ist die Erfindung, insbesondere in einem Ausführungsbeispiel schematisch dargestellt. Es zeigen:
- Fig. 1: eine längs geschnittene Seitenansicht einer erfindungsgemäßen Vorrichtung zum Trennen von Füllmaterial aus einem streifenförmigen Bandmaterial;
- Fig. 2: eine vergrößerte Detailansicht der Vorrichtung gemäß der Fig. 1;
- Fig. 3: eine weitere längsgeschnittene Seitenansicht der Vorrichtung gemäß der Fig. 1;
- Fig. 4: eine quer geschnittene Draufsicht auf die Vorrichtung gemäß der Fig. 1;
- Fig. 5: eine längs geschnittene Seitenansicht einer weiteren erfindungsgemäßen Vorrichtung zum Trennen von Füllmaterial aus einem streifenförmigen Bandmaterial, und
- Fig. 6: eine längs geschnittene Seitenansicht einer noch weiteren erfindungsgemäßen Vorrichtung zum Trennen von Füllmaterial aus einem streifenförmigen Bandmaterial.

In den Figuren sind gleiche oder einander entsprechende Elemente jeweils mit den gleichen Bezugszeichen bezeichnet und werden daher, sofern nicht zweckmäßig, nicht erneut beschrieben.

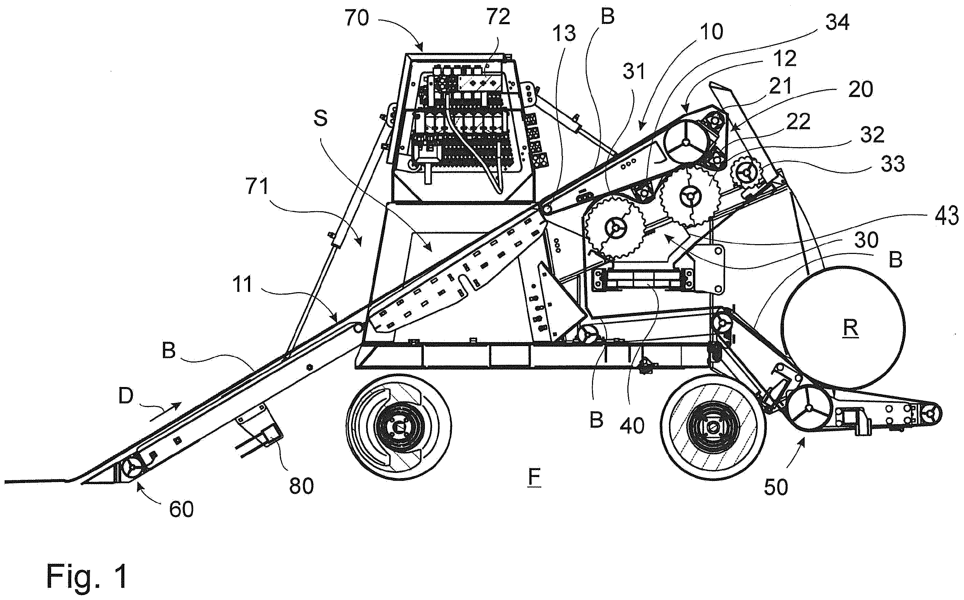

Fig. 1 zeigt eine längs geschnittene Seitenansicht einer erfindungsgemäßen Vorrichtung zum Trennen von Füllmaterial aus einem streifenförmigen Bandmaterial B, das in diesem Beispiel ein flächig verlegter Kunstrasen sein soll. Streifen dieses Kunstrasens B werden über ein Transportmittel 10 einem Umlenkmittel 20 zu- und schließlich wellenförmig durch ein Entleerungsmittel 30 geführt, wobei ein in dem Kunstrasen B eingebrachtes Füllmaterial auf ein Fördermittel 40 fällt, von dem es zu der dem Betrachter zugewandten Seite der Vorrichtung abtransportiert wird. Der Kunstrasen B wird dabei von dem Transportmittel 10 über eine Rampe 11 hinweg gefördert und nach Durchtritt durch das Entleerungsmittel 30 in einem Verarbeitungsmittel 50 aufgerollt. Das Verarbeitungsmittel 50 ist dabei absenkbar, so dass eine mühelose Entladung einer Rasenrolle R möglich ist. Einzelne Bahnen des Kunstrasens B werden mit einem Schneidmittel 60 aus ihrem flächigen Belag herausgetrennt, das am vorderen Ende der Rampe 11 angeordnet ist. Die erfindungsgemäße Vorrichtung ist dabei als selbstfahrendes Gerät mit einem Fahrwerk F ausgestaltet, das über einen Sensor 80 automatisch steuerbar ist.

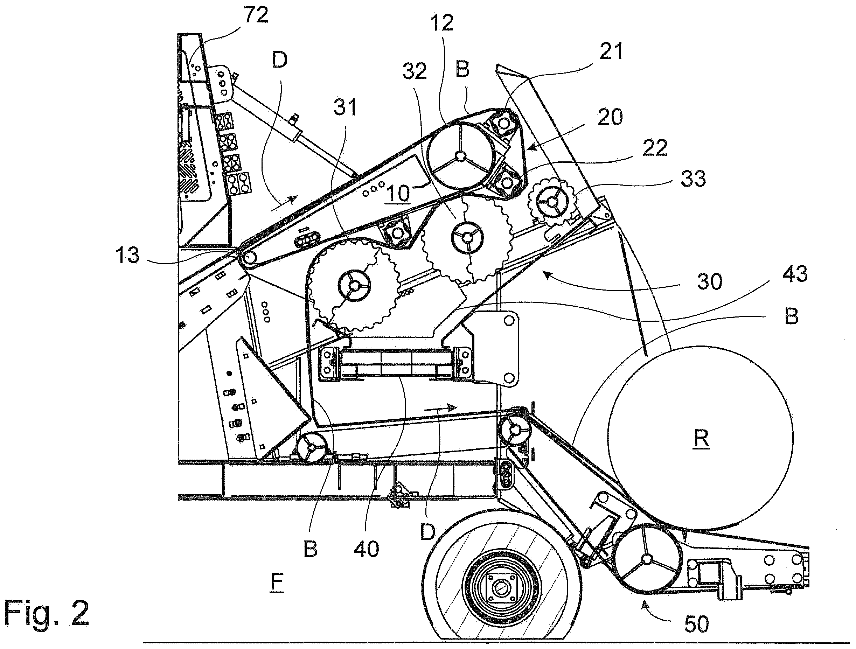

Fig. 2 zeigt eine vergrößerte Detailansicht der Vorrichtung gemäß der Fig. 1 zur besseren Erläuterung der Details von Transportmittel 10, Umlenkmittel 20 und Entleerungsmittel 30. Das Transportmittel 10 kann dabei Förderbänder und/oder -gurte umfassen, über welche der Kunstrasen B die Rampe 11 hinauf gefördert wird. Auch die Rampe 11 kann dabei als entsprechendes Transportmittel ausgebildet sein.

In Förderrichtung D des Kunstrasens B gesehen hinter einer Umlenkwalze 12 setzt hier ein Umlenkmittel 20 an, das in diesem Beispiel eine Kombination von zwei Klopfwalzen 21,22 umfasst, welche zum einen den Kunstrasen B umschlagen, zum anderen gleichzeitig seine Oberfläche aufweiten, so dass das in seinem Flor befindliche Füllmaterial leicht herausfallen kann. Durch das Klopfen der im Querschnitt kantig ausgeführten Klopfwalzen 21,22 wird das Füllmaterial bereits teilweise aus dem Kunstrasen B getrennt, wenigstens aber schon gelöst. Das Füllmaterial kann dabei zum Beispiel aus Sand, (Gummi-)Granulat oder Erde bestehen.

Im umgelenkten Bereich des Kunstrasens B, das heißt in dem in Förderrichtung D des Kunstrasens B gesehen hinter der linearen Förderstrecke des Transportmittels 10 liegenden Umschlagbereich des Kunstrasens B, ist das Entleerungsmittel 30 angeordnet. In diesem speziellen Fall besteht das Entleerungsmittel 30 aus einer Kombination von zwei Andruckwalzen 31,32 und einer zwischen diesen Andruckwalzen 31,32 angeordneten weiteren Klopfwalze 34, wobei der Kunstrasen B wellenförmig durch das Entleerungsmittel 30 geführt ist. Die beiden Andruckwalzen 31,32 sind dabei so gegen die dazwischen liegende Klopfwalze 34 positioniert, dass sie den Kunstrasen B mit seiner Unterseite gegen die rotierende Klopfwalze 34 drücken. Der Kunstrasen B wird dabei über eine Mantelfläche der Klopfwalze 34 gespannt und sein Flor im Bereich der Klopfwalze 34 geweitet, so dass diese besonders wirksam ist. Das ausgeklopfte Füllmaterial fällt dabei nach unten in einen Schacht 43 und auf das Fördermittel 40, das hier als quer zur Fahrtrichtung der Vorrichtung angeordnetes Förderband 40 ausgebildet ist.

Die Andruckwalzen 31,32 des Entleerungsmittels 30 weisen hier keine durchgehend geschlossene Mantelfläche auf, obwohl dies natürlich genauso möglich wäre. Stattdessen bestehen die Andruckwalzen 31,32 aus auf einer jeweiligen Drehachse angeordneten, einzelnen Sternrädern, die in einem schrägen Winkel an der Drehachse befestigt sind, so dass sie bei Rotation eine taumelnde Bewegung ausführen. Die Vorsprünge an ihrem jeweiligen Umfang greifen dabei in das Material des Kunstrasens B ein und drücken diesen nicht nur gegen die Klopfwalze 34, sondern nehmen darüber hinaus auch noch eine Führungsfunktion für den Kunstrasen B unterhalb des Transportmittels 10 wahr. Ihre taumelnde Bewegung verhindert dabei ein Einpressen des Füllmaterials in den Kunstrasen B in der Laufspur der Andruckwalzen 31,32, und führt zugleich zu einem Walken des Materials des Kunstrasens B, wodurch sich das Füllmaterial noch besser löst. Eine weitere Andruckwalze 33 des Entleerungsmittels 30 ist im Bereich der Klopfwalzen 21,22 des Umlenkmittels 20 vorgesehen und kann zwischen diesen positioniert werden.

Zum Einfädeln des Kunstrasens B kann das Transportmittel 10 um eine Schwenkachse 13 verschwenkt werden, so dass das Entleerungsmittel 30 von oben frei zugänglich wird. Nach Durchtritt durch das Entleerungsmittel 30 wird der Kunstrasen B dem Verarbeitungsmittel 50 zugeführt, wo er zu einer Rasenrolle R aufgewickelt wird. Grundsätzlich ist es aber auch möglich, das Verarbeitungsmittel 50 zum Häckseln oder Wiederauslegen des vom Füllmaterial freien Kunstrasen B auszulegen oder als eine austauschbare, mit der Vorrichtung koppelbare Einheit zu gestalten. Zur Verbesserung der Trenneffizienz sollen die Klopfwalzen 21,22 und 34 der hier dargestellten Vorrichtung unterschiedliche Klopffrequenzen aufweisen, die zum Beispiel im Umlenkmittel 20 geringer, als in dem Entleerungsmittel 30 sind.

Es bleibt anzumerken, dass alle rotierenden Bauteile unter Berücksichtigung der Signale des Sensors 80 in ihrer Drehzahl untereinander und mit Blick auf die Fahrgeschwindigkeit des Geräts so aufeinander abgestimmt sind, dass eine Blockade des Kunstrasens B in der Vorrichtung ausgeschlossen ist.

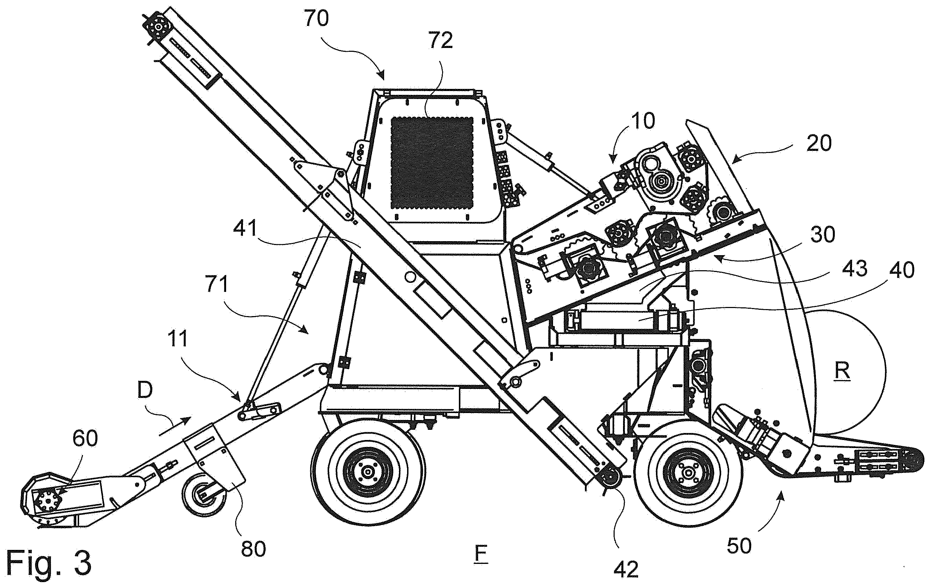

Fig. 3 zeigt eine längs geschnittene Seitenansicht der Vorrichtung gemäß Fig. 1, bei der im Vergleich zu der Fig. 1 lediglich die Schnittebene näher am Betrachter liegt. Zu erkennen sind dabei die Strukturen der Rampe 11, des Transportmittels 10, des Umlenkmittels 20, des Entleerungsmittels 30 und des Fördermittels 40,41 zum Abtransport des aus dem Kunstrasen B geklopften Füllmaterials. Das Fördermittel 41 ist dabei als ein Förderband ausgelegt, welches um eine Schwenkachse 42 um 180° verschwenkbar ist, so dass das Füllmaterial in Fahrtrichtung der Vorrichtung, also in der Figur links von der Vorrichtung oder in Gegenfahrtrichtung, also in der Figur rechts von der Vorrichtung, aufgenommen werden kann. Eine Portalbrücke überspannt dabei einen Einlaufbereich 71 der Vorrichtung, wobei sich dieser in Förderrichtung D des Bandmaterials B vor den Umlenkmittel 20 befindet, und die Portalbrücke 70 einen Antriebsmotor 72 der Vorrichtung trägt, sodass ein Schwerpunkt der Vorrichtung mittig liegt und diese auch bei hohem Durchsatz an Bandmaterial B stabilisiert.

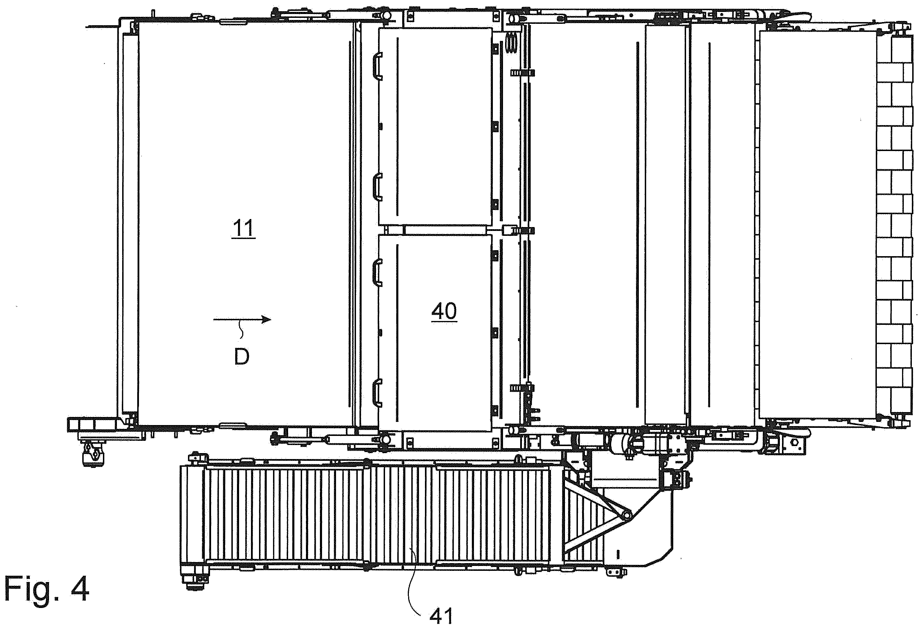

Fig. 4 zeigt eine quer geschnittene Draufsicht auf die Vorrichtung gemäß Fig. 1, bei der das Förderband 41 als geriffelte Fläche dargestellt ist. In die Gegenrichtung verschwenkt, kann es auch von der hier nicht sichtbaren Unterseite her befüllt werden und das getrennte Füllmaterial damit nicht nur in Fahrtrichtung, sondern auch in Gegenfahrtrichtung der Vorrichtung abtransportieren. In der Summe entsteht dadurch einen äußerst flexibel einsetzbare, und zugleich zuverlässig arbeitende sowie einfach handzuhabende Vorrichtung zum Trennen von Füllmaterial aus einem streifenförmigen Bandmaterial.

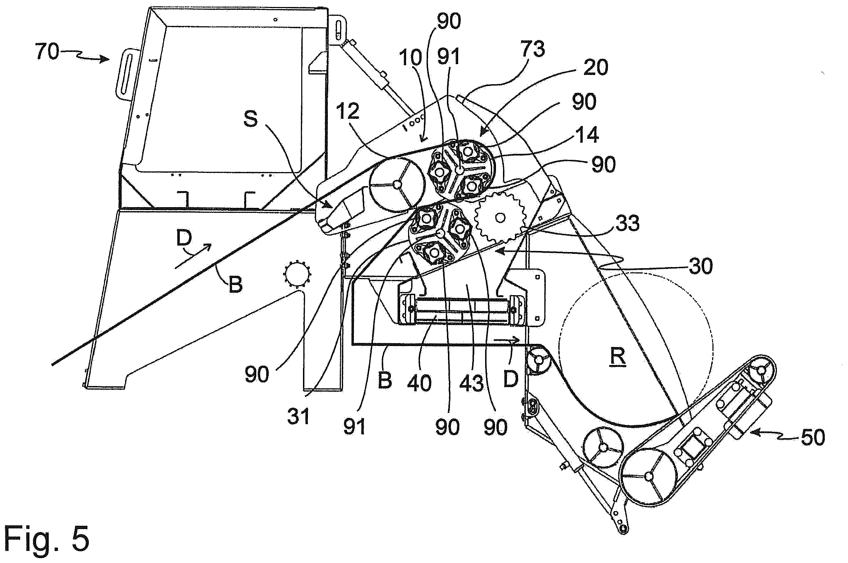

Fig. 5 zeigt eine längs geschnittene Seitenansicht einer weiteren erfindungsgemäßen Vorrichtung zum Trennen von Füllmaterial aus einem streifenförmigen Bandmaterial, die ein konstruktiv optimiertes Transportsystem S vorsieht, bei dem ein Umlenkmittel 20 als Transportmittel 10 des Transportsystems S ausgebildet ist. Das Umlenkmittel 20 umfasst dabei eine Umlenkwalze 14, die das streifenförmige Bandmaterial B sowohl fördert beziehungsweise transportiert, wie auch umlenkt und dabei aufweitet, sodass das in dem Bandmaterial B aufgenommene Füllmaterial nach unten in einen Schacht 43 herausfallen und von einem Fördermittel 40 zur Seite der Vorrichtung hin abtransportiert werden kann. Das als Teil des Transportsystems S ausgebildete Umlenkmittel 20 in Form einer Umlenkwalze 14 weist dabei ein rotatorisch antreibbares Traggestell 91 auf, an dem wiederum mehrere - in diesem Beispiel drei - wiederum rotatorisch antreibbare Klopfwalzen 90 gelagert sind. Die Klopfwalzen 90 weisen dabei einen im wesentlichen quadratischen Querschnitt auf, dem eine besonders intensive Klopfwirkung zukommt. Damit wird das Bandmaterial B von der Umlenkwalze 14 nicht nur gefördert und umgelenkt, sondern gleichzeitig auch besonders effizient entleert. Ein in Förderrichtung D des Bandmaterials B auf Höhe des Umlenkmittels 20 oder nach dem Umlenkmittel 20 angeordnetes Entleerungsmittel 30 umfasst dabei eine Andruckwalze 31, die in diesem Beispiel genauso aufgebaut ist wie die Umlenkwalze 14. Auch diese Andruckwalze 31 weist damit ein Traggestell 91 auf, an dem - hier nur beispielhaft - drei Klopfwalzen 90 gelagert sind. Die Andruckwalze 31 ist dabei so platziert, dass das Bandmaterial B zumindest reibschlüssig förderbar und bedarfsweise auch korrekt ausrichtbar ist, sowie durch die mäandernde Führung über eine Oberfläche der Andruckwalze 31 aufweitbar und zugleich durch die Rotation der Andruckwalze 31 und die Rotation der Klopfwalzen 90 effizient entleerbar ist. Auch das am Entleerungsmittel 30 herausfallende Füllmaterial fällt dabei nach unten durch den Schacht 43 auf das Fördermittel 40 und kann somit seitlich abtransportiert werden. Die beschriebene Funktionsverdichtung auf die Umlenkwalze 14 des Transportsystems S und die Andruckwalze 31 des Entleerungsmittels 30 lassen dabei einen konstruktiv deutlich einfacheren Aufbau der Vorrichtung zum Entfernen von Füllmaterial aus dem streifenförmigen Bandmaterial B zu, der deutlich weniger Bauteile benötigt und somit gewichts- und kostenreduziert ist sowie darüber hinaus wartungs- und störungsfreier läuft. Zur gezielten Ausrichtung des Bandmaterials B auf die optimierte Umlenkwalze 14 umfasst das Transportsystem S eine weitere Umlenkwalze 12, die allerdings keine weitere Förder- beziehungsweise Entleerungsfunktion haben muss. Beim Einlegen des Bandmaterials B in die erfindungsgemäße Vorrichtung wird dieses über die Umlenkwalzen 12 und 14 des Transportsystems S geführt und in einen Spalt zwischen der weiteren Andruckwalze 33 und der Umlenkwalze 14 eingefädelt. Dazu ist weiterhin ein Leitblech 73 dienlich, was das Bandmaterial B diesem Spalt zwischen der weiteren Andruckwalze 33 und der Umlenkwalze 14 zuführt. Damit ist auch eine besonders einfache Beladung der erfindungsgemäßen Vorrichtung mit dem streifenförmigen Bandmaterial B möglich, sodass sich eine Funktionsverdichtung auf einzelne Bauteile und damit eine Verkleinerung der Vorrichtung bei gleichzeitiger Effizienzsteigerung nicht nachteilig auf deren Handhabung auswirkt.

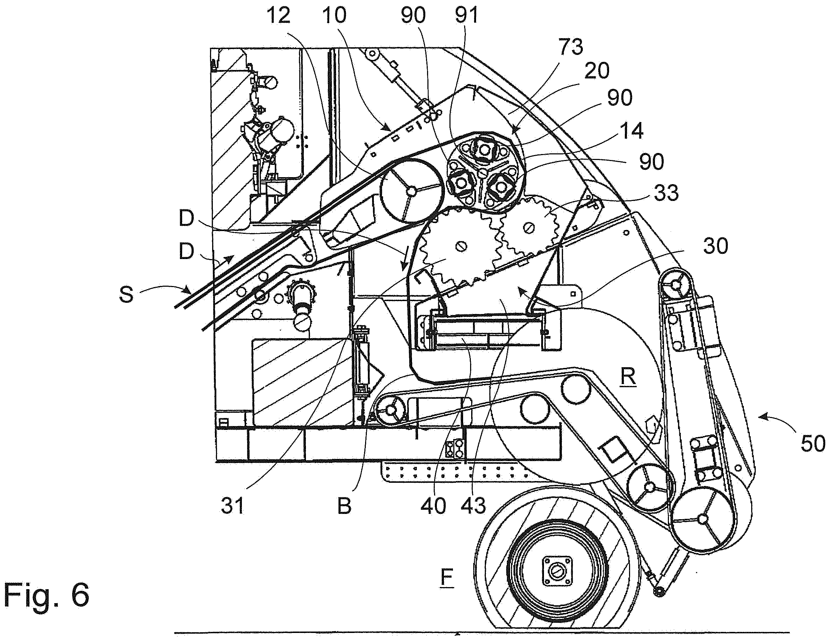

Fig. 6 zeigt eine längs geschnittene Seitenansicht einer noch weiteren erfindungsgemäßen Vorrichtung zum Trennen von Füllmaterial aus einem streifenförmigen Bandmaterial B. Diese weist ein Transportsystem S zum Fördern des Bandmaterials B wie einem Kunstrasen auf, welches in der Folge von Füllmaterial wie Sand entleert und zu einer Rasenrolle R aufgewickelt wird. Das Transportsystem S umfasst dabei neben einer Rampe 11 wie in Fig. 5 ein Transportmittel 10 und ein Umlenkmittel 20 zum Aufweiten und Umschlagen des Bandmaterials B, so dass das Füllmaterial bereits im Bereich des Umlenkmittels 20 aus dem Bandmaterial B herausfallen kann. Ein nachgelagertes Entleerungsmittel 30 für das Bandmaterial B ist dabei in einem Bereich des umgeschlagenen Bandmaterials B angeordnet. Das Entleerungsmittel 30 weist dabei zwei jeweils für das Fördern des Bandmaterials B mit dem Umlenkmittel 20 zusammenwirkende Andruckwalzen 31 und 33 auf, die räumlich gesehen unterhalb von dem Transportmittel 10 des Transportsystems S angeordnet sind. Diese Andruckwalzen 31 und 33 sind weiterhin so angeordnet und dimensioniert, dass das Bandmaterial B mäanderförmig zwischen dem Umlenkmittel 20 und den zwei Andruckwalzen 31 und 33 förderbar ist.

Das Umlenkmittel 20 umfasst dabei eine Umlenkwalze 12 des Transportmittels 10 sowie eine Umlenkwalze 14, die mit Klopfwalzen 90 versehen ist, deren Rotationsachsen sich parallel zu deren Rotationsachse 91 erstrecken. Das mit Hilfe des Transportsystems S in Förderichtung D transportierte Bandmaterial B wie eine Kunstrasen oder ein Teppich wird dabei auf Grund der eigenen Steifigkeit über den Spalt zwischen der Umlenkwalze 12 und der als Klopfwalze ausgebildeten Umlenkwalze 14 geschoben. Die Drehrichtungen der Walzen 12 und 14 verhindern dabei ein Verfangen des Bandmaterials B im Spalt. Ein im Bereich der Umlenkwalze 14 angebrachtes Leitblech 73 richtet das Bandmaterial B schließlich in einen Spalt zwischen der Umlenkwalze 14 und der Andruckwalze 33 aus, so dass es darin eingezogen und einem weiteren Spalt zwischen der Umlenkwalze 14 und der nachfolgenden Andruckwalze 31 zugeführt wird.

Die spezifische Ausbildung und Dimensionierung des Umlenkmittels 20 bzw. seiner Umlenkwalze 14 und den beiden Andruckwalzen 31 und 33 bewirkt dabei eine hohe Funktionsverdichtung des Förder- und Entleerungsprozesses auf diesen Bereich. Denn zum einen wird das Bandmaterial B im Zusammenwirken aller genannten Funktionselemente richtungsstabil und zuverlässig gefördert, insbesondere auch bei starker und/oder unregelmäßiger Beladung durch Füllmaterial jederzeit rutschfrei und gleichförmig, und zum anderen wird es dabei genauso zuverlässig entleert. Dies geschieht dabei sogar in mehreren hintereinander geschalteten Schritten, so schon beim Umschlagen durch die als Klopfwalze ausgebildete Umlenkwalze 14, und schließlich durch mäanderförmiges Durchführen des Bandmaterials B zwischen der Umlenkwalze 14 und den Andruckwalzen 31 und 33 mit dem nach unten gerichteten Flor, das durch ein wechselweises Aufweiten und Stauchen einem Walken des Bandmaterials B gleichkommt. Eine besonders effiziente Entleerung des Bandmaterials B wird dabei insbesondere dadurch erreicht, dass auch bei dessen mäanderförmiger Durchführung zwischen dem Umlenkmittel 20 und den Andruckwalzen 31 und 33 die Klopfwalzen 90 der Umlenkwalze 14 darauf einwirken.

Durch die kompakte Anordnung aller Funktionselemente ist dabei lediglich ein gemeinsamer Schacht 43 erforderlich, durch den das herausgetrennte Füllmaterial auf ein Förderband 40 geleitet und von diesem seitwärts abtransportiert wird. Das schließlich entleerte Bandmaterial B wird abschließend einem Verarbeitungsmittel 50 zugeführt, an dem es zu einer Rasenrolle R aufgewickelt wird. Da die gesamte Vorrichtung mit einem Fahrwerk F versehen ist, kann die Rasenrolle R leicht an eine gewünschte Stelle verbracht und dort entladen werden. Insgesamt stellt die gezeigte Vorrichtung damit den konstruktiv am weitestens fortgeschrittenen Aufbau einer Vorrichtung zum Entfernen von Füllmaterial aus einem streifenförmigen Bandmaterial B dar. Alle weiteren dargestellten Bauteile entsprechen denen der vorstehend beschriebenen Ausführungsform anderer Bauart.

Grundsätzlich kann bei allen hier beschriebenen Ausführungsformen der vorliegenden Erfindung die Anordnung der Funktionselemente dabei auch so getroffen werden, dass das Entleerungsmittel 30 auch so mit dem Transportmittel 10 zusammenwirkt, dass das Bandmaterial B zumindest reibschlüssig dazwischen förderbar ist. Dazu können insbesondere die Rotationsgeschwindigkeiten aller beweglichen Teile so aufeinander abgestimmt sein, dass sich eine optimale Aufweitung und Führung des Bandmaterials B ergibt.

### Die Erfindung betrifft:

Eine Vorrichtung zum Entfernen von Füllmaterial aus einem streifenförmigen Bandmaterial B, insbesondere aus einem Kunstrasen, mit einem Transportsystem S zum Fördern des Bandmaterials B, das wenigstens ein Transportmittel 10 umfasst, und mit einem Umlenkmittel 20 zum Aufweiten und Umschlagen des Bandmaterials B, so dass das Füllmaterial aus dem Bandmaterial B herausfallen kann, sowie mit einem Entleerungsmittel 30 für das Bandmaterial B, das in einem Bereich des umgeschlagenen Bandmaterials B angeordnet ist, wobei die Vorrichtung wenigstens eine Andruckwalze 31, 32, 33 aufweist, die räumlich gesehen unterhalb des Transportsystems S angeordnet ist.

Eine wie zuvor ausgeführte Vorrichtung, wobei das Umlenkmittel 20 als Teil des Transportsystems S, insbesondere als Transportmittel 10 ausgebildet ist.

Eine wie zuvor ausgeführte Vorrichtung, wobei zwischen der wenigsten einen Andruckwalze 31, 32, 33 und dem Transportsystem und/oder dem Umlenkmittel 20 ein Spalt zur Führung des Bandmaterials B, insbesondere zu dessen reibschlüssiger Förderung, wobei das Bandmaterial B sowohl an dem Transportsystem S bzw. einem Element des Transportsystems, z.B. dem Transportmittel 10, und der Andruckwalze 31, 32, 33 anliegt oder sich abstützt, vorgesehen ist.

Eine wie zuvor ausgeführte Vorrichtung, wobei das Transportsystem S das Entleerungsmittel 30 oder wenigstens eine Andruckwalze 31, 32, 33 überdeckt bzw. sich in Förderrichtung D über diese erstreckt.

Eine wie zuvor ausgeführte Vorrichtung, wobei die wenigstens eine Andruckwalze 31, 32, 33 derart mit dem wenigstens einen Transportmittel 10 des Transportsystems S und/oder dem Umlenkmittel 20 zusammenzuwirken vermag, dass das Bandmaterial B zwischen Transportmittel 10 und Andruckwalze 31, 32, 33 und/oder Umlenkmittel 20 und Andruckwalze 31, 32, 33 zumindest reibschlüssig förderbar ist.

Eine wie zuvor ausgeführte Vorrichtung, wobei das Entleerungsmittel 30 wenigstens eine Andruckwalze 31, 32, 33 zum Spannen des Bandmaterials B umfasst.

Eine wie zuvor ausgeführte Vorrichtung, wobei das Entleerungsmittel 30 wenigstens eine Klopfwalze 34 zum Ausklopfen des Bandmaterials B umfasst.

Eine wie zuvor ausgeführte Vorrichtung, wobei die Andruckwalze 31, 32, 33 auch Teil des Entleerungsmittels 30 ist.

Eine wie zuvor ausgeführte Vorrichtung, wobei die Andruckwalze 31, 32, 33 in Förderrichtung des Bandmaterials auf Höhe des Umlenkmittels 20 oder nach dem Umlenkmittel 20 angeordnet ist.

Eine wie zuvor ausgeführte Vorrichtung, wobei mehrere Andruckwalzen 31, 32, 33 vorgesehen sind, deren Rotationsgeschwindigkeit zueinander und/oder gemeinsam steuerbar ist.

Eine wie zuvor ausgeführte Vorrichtung, wobei das Entleerungsmittel 30 zwei jeweils für das Fördern des Bandmaterials mit dem Transportmittel zusammenwirkende Andruckwalzen 31, 32 mit einer dazwischen angeordneten Klopfwalze 34 umfasst.

Eine wie zuvor ausgeführte Vorrichtung, wobei die Klopfwalze 34 so angeordnet ist, dass das Bandmaterial B wellen- oder mäanderförmig über die Andruckwalzen 31, 32 hinweg führbar ist.

Eine wie zuvor ausgeführte Vorrichtung, wobei die wenigstens eine Andruckwalze 31, 32, 33 eine Mantelfläche mit Vorsprüngen zum Eingreifen in ein Bandmaterial B aufweist.

Eine wie zuvor ausgeführte Vorrichtung, wobei die wenigstens eine Andruckwalze 31, 32, 33 eine Drehwelle mit mindestens einem Sternrad umfasst.

Eine wie zuvor ausgeführte Vorrichtung, wobei das wenigstens eine Sternrad schräg ausgerichtet zu der Drehwelle befestigt ist.

Eine wie zuvor ausgeführte Vorrichtung, wobei das Umlenkmittel 20 wenigstens eine Klopfwalze 21, 22 umfasst, über die das Bandmaterial B führbar ist.

Eine wie zuvor ausgeführte Vorrichtung, wobei das Umlenkmittel 20 zumindest teilweise gebildet ist von einer Umlenkwalze 12.

Eine wie zuvor ausgeführte Vorrichtung, wobei die Klopfwalzen 21, 22, 34 eine individuell oder gruppenweise unterschiedliche Klopffrequenz aufweisen.

Eine wie zuvor ausgeführte Vorrichtung, wobei das wenigstens eine Transportmittel 10 des Transportsystems S als eines oder als mehrere umlaufende Transportbänder ausgebildet ist/sind.

Eine wie zuvor ausgeführte Vorrichtung, wobei das wenigstens eine Transportmittel 10 des Transportsystems S als wenigstens eine aus einer Mehrzahl von zueinander beabstandeten, parallel angeordneten Transportgurten aufweisende Transportgutanordnung ausgebildet ist.

Eine wie zuvor ausgeführte Vorrichtung, wobei ein Ober- und Untertrum des Transportmittels 10 für den Transport des Bandmateriales B dient.

Eine wie zuvor ausgeführte Vorrichtung, wobei ein Fördermittel 40, 41 zum Abtransportieren von getrenntem Füllmaterial vorgesehen ist.

Eine wie zuvor ausgeführte Vorrichtung, wobei das Fördermittel 40, 41 ein um 180° schwenkbares Förderband 41 umfasst.

Eine wie zuvor ausgeführte Vorrichtung, wobei ein Verarbeitungsmittel 50 zum Aufrollen, zum Häckseln oder zum Wiederauslegen des vom Füllmaterial freien Bandmaterials B vorgesehen ist.

Eine wie zuvor ausgeführte Vorrichtung, wobei ein Schneidmittel 60 zum Zuschneiden des mit Füllmaterial belasteten Bandmaterials B vorgesehen ist.

Eine wie zuvor ausgeführte Vorrichtung, wobei die Vorrichtung als selbstfahrendes Gerät oder als geschlepptes Gerät ausgelegt ist.

Eine wie zuvor ausgeführte Vorrichtung, wobei eine sensorbasierte automatische Steuerung.

Eine wie zuvor ausgeführte Vorrichtung, wobei eine Portalbrücke 70, welche den Einlaufbereich 71 der Vorrichtung überspannt, wobei sich der Einlaufbereich 71 in Förderrichtung D des Bandmaterials B vor dem Umlenkmittel 20 befindet, und die Portalbrücke 70 einen Antriebsmotor 72 der Vorrichtung trägt.

Eine wie zuvor ausgeführte Vorrichtung, wobei das Umlenkmittel 20 als ein Teil des Transportsystems S, insbesondere als Transportmittel 10 ausgebildet ist.

Eine wie zuvor ausgeführte Vorrichtung, wobei das Umlenkmittel 20 wenigstens eine Umlenkwalze 14 umfasst, die insbesondere mit wenigstens einer Klopfwalze 90 ausgestattet ist.

Eine wie zuvor ausgeführte Vorrichtung, wobei das Entleerungsmittel 30 wenigstens eine Andruckwalze 31 umfasst, die insbesondere mit wenigstens einer Klopfwalze 90 ausgestattet ist.

Eine wie zuvor ausgeführte Vorrichtung, wobei in einem Bereich zwischen dem Umlenkmittel 20 und einer ersten Andruckwalze 31 eine weitere, zweite Andruckwalze 33 zum Einfädeln des Bandmaterials B zwischen dem Umlenkmittel 20 und der ersten Andruckwalze 31 angeordnet ist.

Eine wie zuvor ausgeführte Vorrichtung, wobei ein Leitblech 73 zum Zuführen des Bandmaterials B in einen Spalt zwischen der Umlenkwalze 14 und der weiteren Andruckwalze 33 vorgesehen ist.

Eine wie zuvor ausgeführte Vorrichtung, wobei die wenigstens eine Umlenkwalze 13 und/oder Andruckwalze 31 ein rotatorisch antreibbares Traggestell 91 für mehrere wiederum rotatorisch antreibbar daran gelagerte Klopfwalzen 90 umfasst.

Eine wie zuvor ausgeführte Vorrichtung, wobei die Klopfwalzen 90 parallel zur Rotationsachse des Traggestells 91 ausgerichtet sind.

Eine wie zuvor ausgeführte Vorrichtung, wobei die wenigstens eine Klopfwalze 90 einen in Richtung ihrer Rotationsachse gesehen unrunden, insbesondere kreuzförmigen, rechteckigen oder quadratischen Querschnitt aufweisen.

Eine wie zuvor ausgeführte Vorrichtung, wobei das Entleerungsmittel 30 zwei jeweils für das Fördern des Bandmaterials mit dem Umlenkmittel 20 zusammenwirkende Andruckwalzen 31, 32 umfasst, die so angeordnet und dimensioniert sind, dass das Bandmaterial B mäanderförmig zwischen dem Umlenkmittel 20 und den zwei Andruckwalzen 31, 33 förderbar ist.

Die Erfindung betrifft auch eine Vorrichtung zum Entfernen von Füllmaterial aus einem streifenförmigen Bandmaterial B, insbesondere aus einem Kunstrasen, mit einem Transportsystem S zum Fördern des Bandmaterials B, das wenigstens ein Transportmittel 10 umfasst, welches mit einem Umlenkmittel 20 zum Aufweiten und Umschlagen des Bandmaterials B versehen ist, so dass das Füllmaterial aus dem Bandmaterial B herausfallen kann, sowie mit einem Entleerungsmittel 30 für das Bandmaterial B, das in einem Bereich des umgeschlagenen Bandmaterials B angeordnet ist, und die Vorrichtung wenigstens eine Andruckwalze 31, 32, 33 aufweist, die räumlich gesehen unterhalb von dem das Umlenkmittel 20 aufweisenden Transportmittel 10 des Transportsystems S angeordnet ist.

Die Erfindung betrifft auch eine Vorrichtung zum Entfernen von Füllmaterial aus einem streifenförmigen Bandmaterial B, insbesondere aus einem Kunstrasen, mit einem Transportsystem S zum Fördern des Bandmaterials B, das wenigstens ein Transportmittel 10 umfasst, und mit einem Umlenkmittel 20 zum Aufweiten und Umschlagen des Bandmaterials B, so dass das Füllmaterial aus dem Bandmaterial B herausfallen kann, sowie mit einem Entleerungsmittel 30 für das Bandmaterial B, das in einem Bereich des umgeschlagenen Bandmaterials B angeordnet ist, und die Vorrichtung wenigstens eine Andruckwalze 31, 32, 33 aufweist, die räumlich gesehen unterhalb von dem Transportmittel 10 des Transportsystems S angeordnet ist, wobei das Entleerungsmittel 30 zwei jeweils für das Fördern des Bandmaterials mit dem Umlenkmittel 20 zusammenwirkende Andruckwalzen 31, 32 umfasst, die so angeordnet und dimensioniert sind, dass das Bandmaterial B mäanderförmig zwischen dem Umlenkmittel 20 und den zwei Andruckwalzen 31, 33 förderbar ist.

Die jetzt mit der Anmeldung und später eingereichten Ansprüche sind Versuche zur Formulierung ohne Präjudiz für die Erzielung weitergehenden Schutzes.

Sollte sich hier bei näherer Prüfung, insbesondere auch des einschlägigen Standes der Technik, ergeben, dass das eine oder andere Merkmal für das Ziel der Erfindung zwar günstig, nicht aber entscheidend wichtig ist, so wird selbstverständlich schon jetzt eine Formulierung angestrebt, die ein solches Merkmal, insbesondere im Hauptanspruch, nicht mehr aufweist.
Es ist weiter zu beachten, dass die in den verschiedenen Ausführungsformen beschriebenen und in den Figuren gezeigten Ausgestaltungen und Varianten der Erfindung beliebig untereinander kombinierbar sind. Dabei sind einzelne oder mehrere Merkmale beliebig gegeneinander austauschbar. Diese Merkmalskombinationen sind ebenso mit offenbart.

Die in den abhängigen Ansprüchen angeführten Rückbeziehungen weisen auf die weitere Ausbildung des Gegenstandes des HauptAnspruches durch die Merkmale des jeweiligen Unteranspruches hin. Jedoch sind diese nicht als ein Verzicht auf die Erzielung eines selbständigen, gegenständlichen Schutzes für die Merkmale der rückbezogenen Unteransprüche zu verstehen.

Merkmale, die bislang nur in der Beschreibung offenbart wurden, können im Laufe des Verfahrens als von erfindungswesentlicher Bedeutung, zum Beispiel zur Abgrenzung vom Stand der Technik beansprucht werden.

Merkmale, die nur in der Beschreibung offenbart wurden, oder auch Einzelmerkmale aus Ansprüchen, die eine Mehrzahl von Merkmalen umfassen, können jederzeit zur Abgrenzung vom Stande der Technik in den ersten Anspruch übernommen werden, und zwar auch dann, wenn solche Merkmale im Zusammenhang mit anderen Merkmalen erwähnt wurden beziehungsweise im Zusammenhang mit anderen Merkmalen besonders günstige Ergebnisse erreichen.

## Patentansprüche

1. Vorrichtung zum Entfernen von Füllmaterial aus einem streifenförmigen Bandmaterial (B), insbesondere aus einem Kunstrasen, mit einem Transportsystem (S) zum Fördern des Bandmaterials (B), das wenigstens ein Transportmittel (10) umfasst, und mit einem Umlenkmittel (20) zum Aufweiten und Umschlagen des Bandmaterials (B), so dass das Füllmaterial aus dem Bandmaterial (B) herausfallen kann, sowie mit einem Entleerungsmittel (30) für das Bandmaterial (B), das in einem Bereich des umgeschlagenen Bandmaterials (B) angeordnet ist, wobei die Vorrichtung wenigstens eine Andruckwalze (31, 32, 33) aufweist, die räumlich gesehen unterhalb des Transportsystems (S) angeordnet ist und das Umlenkmittel (20) wenigstens eine Umlenkwalze (14) umfasst, **dadurch gekennzeichnet, dass** die wenigstens eine Umlenkwalze (14) und/oder Andruckwalze (31) ein rotatorisch antreibbares Traggestell (91) für mehrere daran gelagerte Klopfwalzen (90) umfasst.

2. Vorrichtung nach Anspruch 1, **dadurch gekennzeichnet, dass** das Umlenkmittel (20) als Teil des Transportsystems (S), insbesondere als Transportmittel (10) ausgebildet ist und/oder das Transportsystem (S) das Entleerungsmittel (30) oder wenigstens eine Andruckwalze (31, 32, 33) überdeckt bzw. sich in Förderrichtung (D) über diese erstreckt.

3. Vorrichtung nach Anspruch 1 oder 2, **dadurch gekennzeichnet, dass** die wenigstens eine Andruckwalze (31, 32, 33) derart mit dem wenigstens einen Transportmittel (10) des Transportsystems (S) und/oder dem Umlenkmittel (20) zusammenzuwirken vermag, dass das Bandmaterial (B) zwischen Transportmittel (10) und Andruckwalze (31, 32, 33) und/oder Umlenkmittel (20) und Andruckwalze (31, 32, 33) zumindest reibschlüssig förderbar ist und/oder zwischen der wenigsten einen Andruckwalze (31, 32, 33) und dem Transportsystem und/oder dem Umlenkmittel (20) ein Spalt zur Führung des Bandmaterials (B), insbesondere zu dessen reibschlüssiger Förderung, wobei das Bandmaterial (B) sowohl an dem Transportsystem (S) bzw. einem Element des Transportsystems, z.B. dem Transportmittel (10), und der Andruckwalze (31, 32, 33) anliegt oder sich abstützt, vorgesehen ist.

4. Vorrichtung nach einem der vorhergehenden Ansprüche, **dadurch gekennzeichnet, dass** das Entleerungsmittel (30) wenigstens eine Andruckwalze (31, 32, 33) zum Spannen des Bandmaterials (B) umfasst und/oder das Entleerungsmittel (30) wenigstens eine Klopfwalze (34) zum Ausklopfen des Bandmaterials (B) umfasst und/oder die Andruckwalze (31, 32, 33) auch Teil des Entleerungsmittels (30) ist und/oder die Andruckwalze (31, 32, 33) in Förderrichtung des Bandmaterials auf Höhe des Umlenkmittels (20) oder nach dem Umlenkmittel (20) angeordnet ist und/oder mehrere Andruckwalzen (31, 32, 33) vorgesehen sind, deren Rotationsgeschwindigkeit zueinander und/oder gemeinsam steuerbar ist und/oder dadurch, dass mehrere Klopfwalzen vorgesehen sind und die Klopfwalzen (21, 22, 34) eine individuell oder gruppenweise unterschiedliche Klopffrequenz aufweisen.

5. Vorrichtung nach einem der vorhergehenden Ansprüchen, **dadurch gekennzeichnet, dass** das Entleerungsmittel (30) zwei jeweils für das Fördern des Bandmaterials mit dem Transportmittel zusammenwirkende Andruckwalzen (31, 32) mit wenigstens einer dazwischen angeordneten Klopfwalze (34) umfasst und/oder die Klopfwalze (34) so angeordnet ist, dass das Bandmaterial (B) wellen- oder mäanderförmig über die Andruckwalzen (31, 32) hinweg führbar ist und/oder das Umlenkmittel (20) wenigstens eine Klopfwalze (21, 22) umfasst, über die das Bandmaterial (B) führbar ist und/oder das Umlenkmittel (20) zumindest teilweise gebildet ist von einer Umlenkwalze (12) und/oder das Umlenkmittel (20) als ein Teil des Transportsystems (S), insbesondere als Transportmittel (10) ausgebildet ist.

6. Vorrichtung einem der vorhergehenden Ansprüche, **dadurch gekennzeichnet, dass** die wenigstens eine Andruckwalze (31, 32, 33) eine Mantelfläche mit Vorsprüngen zum Eingreifen in ein Bandmaterial (B) aufweist und/oder die wenigstens eine Andruckwalze (31, 32, 33) eine Drehwelle mit mindestens einem Sternrad umfasst, insbesondere wobei das wenigstens eine Sternrad schräg ausgerichtet zu der Drehwelle befestigt ist.

7. Vorrichtung nach einem der vorhergehenden Ansprüche, **dadurch gekennzeichnet, dass** das wenigstens eine Transportmittel (10) des Transportsystems (S) als eines oder als mehrere umlaufende Transportbänder ausgebildet ist/sind und/oder das wenigstens eine Transportmittel (10) des Transportsystems (S) als wenigstens eine aus einer Mehrzahl von zueinander beabstandeten, parallel angeordneten Transportgurten aufweisende Transportgurtanordnung ausgebildet ist und/oder ein Ober- und Untertrum des Transportmittels (10) für den Transport des Bandmateriales (B) dient.

8. Vorrichtung nach einem der vorhergehenden Ansprüche, **dadurch gekennzeichnet, dass** ein Fördermittel (40, 41) zum Abtransportieren von getrenntem Füllmaterial vorgesehen ist, insbesondere wobei das Fördermittel (40, 41) ein um 180° schwenkbares Förderband (41) umfasst.

9. Vorrichtung nach einem der vorhergehenden Ansprüche, **dadurch gekennzeichnet, dass** ein Verarbeitungsmittel (50) zum Aufrollen, zum Häckseln oder zum Wiederauslegen des vom Füllmaterial freien Bandmaterials (B) vorgesehen ist und/oder ein Schneidmittel (60) zum Zuschneiden des mit Füllmaterial belasteten Bandmaterials (B) vorgesehen ist.

10. Vorrichtung nach einem der vorhergehenden Ansprüche, **dadurch gekennzeichnet, dass** die Vorrichtung als selbstfahrendes Gerät oder als geschlepptes Gerät ausgelegt ist.

11. Vorrichtung nach einem der vorhergehenden Ansprüche, **gekennzeichnet durch** eine sensorbasierte automatische Steuerung und/oder **durch** eine Portalbrücke (70), welche den Einlaufbereich (71) der Vorrichtung überspannt, wobei sich der Einlaufbereich (71) in Förderrichtung (D) des Bandmaterials (B) vor dem Umlenkmittel (20) befindet, und die Portalbrücke (70) einen Antriebsmotor (72) der Vorrichtung trägt.

12. Vorrichtung nach einem der vorhergehenden Ansprüche, **dadurch gekennzeichnet, dass** das Entleerungsmittel (30) wenigstens eine Andruckwalze (31) umfasst, die insbesondere mit wenigstens einer Klopfwalze (90) ausgestattet ist und/oder das Entleerungsmittel (30) zwei jeweils für das Fördern des Bandmaterials mit dem Umlenkmittel (20) zusammenwirkende Andruckwalzen (31, 32) umfasst, die so angeordnet und dimensioniert sind, dass das Bandmaterial (B) mäanderförmig zwischen dem Umlenkmittel (20) und den zwei Andruckwalzen (31, 33) förderbar ist.

13. Vorrichtung nach einem der vorhergehenden Ansprüche, **dadurch gekennzeichnet, dass** in einem Bereich zwischen dem Umlenkmittel (20) und einer ersten Andruckwalze (31) eine weitere, zweite Andruckwalze (33) zum Einfädeln des Bandmaterials (B) zwischen dem Umlenkmittel (20) und der ersten Andruckwalze (31) angeordnet ist und/oder dadurch, dass ein Leitblech (73) zum Zuführen des Bandmaterials (B) in einen Spalt zwischen der Umlenkwalze (14) und der weiteren Andruckwalze (33) vorgesehen ist und/oder dadurch, dass die Klopfwalzen (90) parallel zur Rotationsachse des Traggestells (91) ausgerichtet sind und/oder die wenigstens eine Klopfwalze (90) einen in Richtung ihrer Rotationsachse gesehen unrunden, insbesondere kreuzförmigen, rechteckigen oder quadratischen Querschnitt aufweisen und/oder die Klopfwalzen (90) wiederum rotatorisch antreibbar sind.

14. Vorrichtung zum Entfernen von Füllmaterial aus einem streifenförmigen Bandmaterial (B), insbesondere aus einem Kunstrasen, mit einem Transportsystem (S) zum Fördern des Bandmaterials (B), das wenigstens ein Transportmittel (10) umfasst, welches mit einem Umlenkmittel (20) zum Aufweiten und Umschlagen des Bandmaterials (B) versehen ist, so dass das Füllmaterial aus dem Bandmaterial (B) herausfallen kann, sowie mit einem Entleerungsmittel (30) für das Bandmaterial (B), das in einem Bereich des umgeschlagenen Bandmaterials (B) angeordnet ist, wobei die Vorrichtung wenigstens eine Andruckwalze (31, 32, 33) aufweist, die räumlich gesehen unterhalb von dem das Umlenkmittel (20) aufweisenden Transportmittel (10) des Transportsystems (S) angeordnet ist und das Umlenkmittel (20) wenigstens eine Umlenkwalze (14) umfasst, **dadurch gekennzeichnet, dass** die wenigstens eine Umlenkwalze (14) und/oder Andruckwalze (31) ein rotatorisch antreibbares Traggestell (91) für mehrere daran gelagerte Klopfwalzen (90) umfasst.

15. Vorrichtung zum Entfernen von Füllmaterial aus einem streifenförmigen Bandmaterial (B), insbesondere aus einem Kunstrasen, mit einem Transportsystem (S) zum Fördern des Bandmaterials (B), das wenigstens ein Transportmittel (10) umfasst, und mit einem Umlenkmittel (20) zum Aufweiten und Umschlagen des Bandmaterials (B), so dass das Füllmaterial aus dem Bandmaterial (B) herausfallen kann, sowie mit einem Entleerungsmittel (30) für das Bandmaterial (B), das in einem Bereich des umgeschlagenen Bandmaterials (B) angeordnet ist, und die Vorrichtung wenigstens eine Andruckwalze (31, 32, 33) aufweist, die räumlich gesehen unterhalb von dem Transportmittel (10) des Transportsystems (S) angeordnet ist, wobei das Entleerungsmittel (30) zwei jeweils für das Fördern des Bandmaterials mit dem Umlenkmittel (20) zusammenwirkende Andruckwalzen (31, 32) umfasst, die so angeordnet und dimensioniert sind, dass das Bandmaterial (B) mäanderförmig zwischen dem Umlenkmittel (20) und den zwei Andruckwalzen (31, 33) förderbar ist und das Umlenkmittel (20) wenigstens eine Umlenkwalze (14) umfasst, **dadurch gekennzeichnet, dass** die wenigstens eine Umlenkwalze (14) und/oder Andruckwalze (31) ein rotatorisch antreibbares Traggestell (91) für mehrere daran gelagerte Klopfwalzen (90) umfasst.

## Claims

1. Device for removing filler material from a stripe-shaped band material (B), in particular from an artificial turf, having a transport system (S) for conveying the band material (B) comprising at least one transport means (10), and having a diverting means (20) for widening and folding the band material (B), so that the filler material can drop out of the band material (B), as well as an emptying means (30) for the band material (B) arranged in an area of the folded band material (B), wherein the device comprises at least one of a pressure roller (31, 32, 33), arranged, when seen three-dimensionally, below the transport system (S), and the diverting means (20) comprises at least one diverting roller (14), **characterized in that** the at least one diverting roller (14) and/or pressure roller (31) comprises a rotatorily driven carrying frame (91) for several tapping rollers (90) mounted thereon.

2. Device according to claim 1, **characterized in that** the diverting means (20) is configured as part of the transportation system (S), in particular as transportation means (10), and/or the transportation system (S) covers the emptying means (30) or at least one of a pressure roller (31, 32, 33) or extends over it in the direction of conveying (D).

3. Device according to either claim 1 or 2, **characterized in that** the at least one of a pressure roller (31, 32, 33) is able to interact with the at least one transportation means (10) of the transport system (S) and/or the diverting means (20) such that the band material (B) remains conveyable at least by friction contact between the transport means (10) and the pressure roller (31, 32, 33), and/or the diverting means (20) and pressure roller (31, 32, 33), and/or between the at least one pressure roller (31, 32, 33) and the transport system and/or the diverting means (20) a gap is provided for guiding the band material (B), in particular for a conveying by frictional contact, wherein the band material (B) is in contact with or supported on the transport system (S) or an element of the transport system, for example the transport means (10), and the pressure roller (31, 32, 33).

4. Device according to one of the preceding claims, **characterized in that** the emptying means (30) comprises at least one of a pressure roller (31, 32, 33) for tensioning the band material (B), and/or the emptying means (30) comprises at least one tapping roller (34) for tapping the band material (B), and/or the pressure roller (31, 32, 33) is also part of the emptying means (30), and/or the pressure roller (31, 32, 33) is arranged in conveying direction of the band material on the level of the diverting means (20) or downstream of the diverting means (20), and/or several pressure rollers (31, 32, 33) are provided the rotational speed of which can be controlled with respect to one another and/or jointly, and/or **in that** several tapping rollers are provided, and the tapping rollers (21, 22, 34) have different tapping frequencies either individually or in groups.

5. Device according to one of the preceding claims, **characterized in that** the emptying means (30) comprises two pressure rollers (31, 32) interacting each with the transport means for conveying the band material with at least one tapping roller (34) arranged inbetween, and/or the tapping roller (34) is arranged such that the band material (B) can be guided wave- or meander-like over the pressure rollers (31, 32), and/or the diverting means (20) comprises at least one tapping roller (21, 22) over which the band material (B) can be guided, and/or the diverting means (20) is formed at least partly by a diverting roller (12), and/or the diverting means (20) is configured as part of the transport system (S), in particular as transport means (10).

6. Device according to one of the preceding claims, **characterized in that** the at least one of a pressure roller (31, 32, 33) has a lateral surface with projections for engaging with a band material (B), and/or the at least one of a pressure roller (31, 32, 33) comprises a rotating shaft with at least one star wheel, in particular wherein the at least one star wheel is attached with sloped orientation with respect to the rotating shaft.

7. Device according to one of the preceding claims, **characterized in that** the at least one transport means (10) of the transport system (S) is configured as one or more circulating transport belts, and/or the at least one transport means (10) of the transport system (S) is configured as at least one arrangement of transport belts having a multitude of spaced, parallel arranged transport belts, and/or an upper and lower run of the transport means (10) serves for transporting the band material (B).

8. Device according to one of the preceding claims, **characterized in that** a conveying means (40, 41) for removing isolated filler material is provided, in particular wherein the conveying means (40, 41) comprises a conveyor belt (41) that is pivotable by 180°.

9. Device according to one of the preceding claims, **characterized in that** a processing means (50) for winding up, chopping or re-arranging the band material (B), that is free from filler material, is provided, and/or a cutting means (60) for cutting the band material (B) full of filler material is provided.

10. Device according to one of the preceding claims, **characterized in that** the device is provided as automotive or towed device.

11. Device according to one of the preceding claims, **characterized by** a sensor-based automatic control, and/or a portal bridge (70) spanning the input area (71) of the device, wherein the input area (71) is located upstream the diverting means (20) in the direction of conveying (D) of the band material (B), and the portal bridge (70) carries a driving motor (72) of the device.

12. Device according to one of the preceding claims, **characterized in that** the emptying means (30) comprises at least one pressure roller (31) that is in particular equipped with at least one tapping roller (90), and/or the emptying means (30) comprises two pressure rollers (31, 32), each interacting with the diverting means (20) for conveying the band material, the pressure rollers being arranged and dimensioned such that the band material (B) can be conveyed meander-like between the diverting means (20) and the two pressure rollers (31, 33).

13. Device according to one of the preceding claims, **characterized in that** in an area between the diverting means (20) and a first pressure roller (31) another, second pressure roller (33) is arranged for threading the band material (B) between the diverting means (20) and the first pressure roller (31), and/or **in that** a guide plate (73) for guiding the band material (B) in a gap between the diverting roller (14) and the other pressure roller (33) is provided, and/or **in that** the tapping rollers (90) are orientated parallel to the rotational axis of the carrying frame (91), and/or the at least one tapping roller (90) has a cross section that is, when viewed in the direction of its rotational axis, non-circular, in particular cross-shaped, rectangular or square, and/or the tapping rollers (90) can be driven rotatorily.

14. Device for removing filler material from a stripe-shaped band material (B), in particular an artificial turf, with a transport system (S) for conveying the band material (B) comprising at least one transport means (10), that is provided with a diverting means (20) for widening and folding the band material (B) so that the filler material can drop out of the band material (B), as well as an emptying means (30) for the band material (B) arranged in an area of the folded band material (B), wherein the device has at least one of a pressure roller (31, 32, 33) that is arranged, when viewed three-dimensionally, below the transport means (10) of the transport system (S) having the diverting means (20), and the diverting means (20) comprises at least one diverting roller (14), **characterized in that** the at least one diverting roller (14) and/or pressure roller (31) comprises a rotatorily driven carrying frame (91) for several tapping rollers (90) mounted thereon.

15. Device for removing filler material from a stripe-shaped band material (B), in particular an artificial turf, with a transport system (S) for conveying the band material (B) comprising at least one transport means (10), and with a diverting means (20) for widening and folding the band material (B) so that the filler material can drop out of the band material (B), as well as an emptying means (30) for the band material (B) arranged in an area of the folded band material (B), and the device comprises at least one of a pressure roller (31, 32, 33) that is arranged, when viewed three-dimensionally, below the transport means (10) of the transport system (S), wherein the emptying means (30) comprises two pressure rollers (31, 32) each interacting with the diverting means (20) for conveying the band material, the pressure rollers being arranged and dimensioned such that the band material (B) can be conveyed meander-like between the diverting means (20) and the two pressure rollers (31, 33), and the diverting means (20) comprises at least one diverting roller (14), **characterized in that** the at least one diverting roller (14) and/or pressure roller (31) comprise(s) a rotatorily driven carrying frame (91) for several tapping rollers (90) mounted thereon.

## Revendications

1. Dispositif de vidange de matériau de remplissage d'un matériau en forme de bande (B), en forme de lanière, en particulier de gazon synthétique, avec un système de transport (S) destiné à convoyer le matériau en forme de bande (B) et comprenant au moins un moyen de transport (10), et avec un moyen de renvoi (20) destiné à élargir et à replier le matériau en forme de bande (B) afin de permettre au matériau de remplissage de tomber hors du matériau en forme de bande (B), ainsi qu'avec un moyen d'évacuation (30) destiné au matériau en forme de bande (B) situé au niveau de la zone du repliement du matériau en forme de bande (B), configuré de façon à ce que le dispositif possède au moins un rouleau presseur (31, 32, 33) situé en-dessous du système de transport (S) et avec le moyen de renvoi (20) comprenant au moins un rouleau de renvoi (14), **caractérisé en ce qu'**au moins un rouleau de renvoi (14) et/ou un rouleau presseur (31) comprend une armature de support (91) pour plusieurs rouleaux batteurs (90) pouvant être mis en mouvement par une commande rotative.

2. Dispositif selon la revendication 1, **caractérisé en ce que** le moyen de renvoi (20) est configuré comme faisant partie du système de transport (S), en particulier comme moyen de transport (10) et/ou **en ce que** le système de transport (S) couvre ou s'étend selon la direction de transport (D) au-dessus du moyen d'évacuation (30) ou au moins au dessus d'un rouleau presseur (31, 32, 33).

3. Dispositif selon la revendication 1 ou 2, **caractérisé en ce qu'**au moins un rouleau presseur (31, 32, 33) peut interagir de telle façon avec au moins un moyen de transport (10) et/ou avec le moyen de renvoi (20) que le matériau en forme de bande (B) peut être transporté au moins par force de frottement entre le moyen de transport (10) et le rouleau presseur (31, 32, 33) et/ou entre le moyen de renvoi (20) et le rouleau presseur (31, 32, 33) et/ou **en ce qu'**une fente est prévue, situé entre au moins un rouleau presseur (31, 32, 33) et le système de transport et/ou le moyen de renvoi (20), destinée au guidage du matériau en forme de bande (B) et en particulier au transport par force de frottement de façon à ce que le matériau en forme de bande (B) appui contre le système de transport (S) ou contre un des éléments du système de transport (S) ou du moyen de transport (10) et le rouleau presseur (31, 32, 33).

4. Dispositif selon une des revendications précédentes, **caractérisé en ce que** le moyen d'évacuation (30) comprend au moins un rouleau presseur (31, 32, 33) destiné à tendre le matériau en forme de bande (B) et/ou **en ce que** le moyen d'évacuation (30) comprend au moins un rouleau batteur (34)pour secouer le matériau en forme de bande (B) et/ou **en ce que** le rouleau presseur (31, 32, 33) fait également partie du moyen d'évacuation (30) et/ou **en ce que** le rouleau presseur (31, 32, 33) est situé selon la direction de transport du matériau en bande à la hauteur du moyen de renvoi (20) ou après le moyen de renvoi (20) et/ou **en ce que** plusieurs rouleaux presseur (31, 32, 33) sont prévus et dont les vitesses de rotation peuvent être ajustés entre les rouleaux et/ou en commun et/ou **en ce que** els rouleaux batteur (21, 22, 34) possèdent chacun sa fréquence de battement ou des fréquences de battement communes par groupes de rouleaux.

5. Dispositif selon une des revendications précédentes, **caractérisé en ce que** le moyen d'évacuation (30) comprend deux rouleaux presseur (31, 32), dont chacun interagit dans le but du transport du matériau en forme de bande (B) avec le moyen de transport, et situé au milieu, au moins un rouleau batteur (34) et/ou **en ce que** le rouleau batteur (34) est placé de façon à ce que le matériau en forme de bande (B) peut être guidé en forme de vague ou de méandre par dessus les rouleaux presseur (31, 32) et/ou **en ce que** le moyen de renvoi (20) comprend au moins un rouleau batteur (21, 22) par dessus le matériau en forme de bande (B) peut être guidé et/ou **en ce que** le moyen de renvoi (20) est au moins partiellement formé par un rouleau de renvoi (12) et/ou **en ce que** le moyen de renvoi (20) est configuré comme une partie du système de transport (S) et en particulier comme un moyen de transport (10).

6. Dispositif selon une des revendications précédentes, **caractérisé en ce qu'**au moins un des rouleaux presseur (31, 32, 33) comporte une surface de circonférence avec des sailliespénétrant dans le matériau en forme de bande (B) et/ou **en ce qu'**au moins un des rouleaux presseur (31, 32, 33) comprend un arbrerotatif avec au moins une roue en étoile et en particulier avec une fixation d'au moins cette roue en étoile en biais par rapport à l'arbre rotatif.

7. Dispositif selon une des revendications précédentes, **caractérisé en ce qu'**au moins un des moyens de transport (10) du système de transport (S) est configuré comme une ou plusieurs bandes de transport sans fin et/ou **en ce qu'**au moins un des moyens de transport (10) du système de transport (S) est configuré comme un ensemble de courroies de transport consistant en plusieurs courroies de transport parallèles et séparées et/ou **en ce qu'**une partie supérieure et une partie inférieure du moyen de transport (10) sert à transporter le matériau en forme de bande (B).

8. Dispositif selon une des revendications précédentes, **caractérisé en ce qu'**un convoyeur (40, 41) est prévu pour l'évacuation du matériau de remplissage séparé et **en ce qu'**en particulier le convoyeur (40, 41) comprend une bande de transport (41) pouvant être pivoté de 180°.

9. Dispositif selon une des revendications précédentes, **caractérisé en ce qu'**un moyen de traitement (50) est prévu pour l'enroulement, le broyage ou pour la remise en place du matériau en forme de bande (B) nettoyé du matériau de remplissage et/ou **en ce qu'**un moyen de découpe (60) est prévu pour découper le matériau en forme de bande (B) chargé de matériau de remplissage.

10. Dispositif selon une des revendications précédentes, **caractérisé en ce que** le dispositif est configuré comme un dispositif autotracté ou tracté.

11. Dispositif selon unes revendications précédentes, **caractérisé par** un système de contrôle automatique basé sur des capteurs et/ou par un pont portique (70) couvrant la zone d'entrée (71) du dispositif avec la zone d'entrée (71) étant située selon la direction de transport (D) du matériau en forme de bande (B) en amont du moyen de renvoi (20) et en ce que le pont portique (70) supporte un moteur de commande (72) du dispositif.

12. Dispositif selon une des revendications précédentes, **caractérisé en ce que** le moyen d'évacuation (30) comprend au moins un rouleau presseur (31) équipé en particulier au moins d'un rouleau batteur (90) et/ou **en ce que** le moyen d'évacuation (30) comprend deux rouleaux presseur (31, 32), dont chacun sert à transporter le matériau en forme de bande (B), interagissant avec le moyen de renvoi (20) et situés et dimensionnés de façon à ce que le matériau en forme de bande (B) peut être transporté en formant des méandres entre le moyen de renvoi (20) et les deux rouleaux presseurs (31, 33) .

13. Dispositif selon une des revendications précédentes, **caractérisé en ce qu'**un deuxième rouleau presseur (33) est situé dans la zone entre le moyen de renvoi (20) et un premier rouleau presseur (31) et destiné à enfiler le matériau en forme de bande (B) entre le moyen de renvoi (20) et le premier rouleau presseur (31) et/ou **en ce qu'**une tôle de guidage (73) existe, permettant de guider le matériau en forme de bande (B) dans une fente entre le rouleau de renvoi (14) et l'autre rouleau presseur (33) et/ou **en ce que** les rouleaux batteurs (90) sont orientés parallèlement à l'axe de rotation de l'armature de support (91) et/ou **en ce qu'**au moins un des rouleaux batteurs (90) comporte selon l'orientation de l'axe de rotation une section noncirculaire et en particulier une section cruciforme, rectangulaire ou carrée et/ou **en ce que** le mouvement de rotation des rouleaux batteurs (90) peut également être motorisé.

14. Dispositif de vidange de matériau de remplissage d'un matériau en forme de bande (B), en forme de lanière, en particulier de gazon synthétique, avec un système de transport (S) destiné à convoyer le matériau en forme de bande (B) et comprenant au moins un moyen de transport (10), et avec un moyen de renvoi (20) destiné à élargir et à replier le matériau en forme de bande (B) afin de permettre au matériau de remplissage de tomber hors du matériau en forme de bande (B), ainsi qu'avec un moyen d'évacuation (30) destiné au matériau en forme de bande (B) situé au niveau de la zone du repliement du matériau en forme de bande (B), configuré de façon à ce que le dispositif possède au moins un rouleau presseur (31, 32, 33) situé en-dessous du moyen de transport (10), comportant le moyen de renvoi (20), du système de transport (S) et avec le moyen de renvoi (20) comprenant au moins un rouleau de renvoi (14), **caractérisé en ce qu'**au moins un rouleau de renvoi (14) et/ou un rouleau presseur (31) comprenn(ent) une armature de support (91) pour plusieurs rouleaux batteurs (90) pouvant être mis en mouvement par une commande rotative.

15. Dispositif de vidange de matériau de remplissage d'un matériau en forme de bande (B), en forme de lanière, en particulier de gazon synthétique, avec un système de transport (S) destiné à convoyer le matériau en forme de bande (B) et comprenant au moins un moyen de transport (10), et avec un moyen de renvoi (20) destiné à élargir et à replier le matériau en forme de bande (B) afin de permettre au matériau de remplissage de tomber hors du matériau en forme de bande (B), ainsi qu'avec un moyen d'évacuation (30) destiné au matériau en forme de bande (B) situé au niveau de la zone du repliement du matériau en forme de bande (B), configuré de façon à ce que le dispositif possède au moins un rouleau presseur (31, 32, 33) situé en-dessous du moyen de transport (10) du système de transport (S), avec le moyen d'évacuation (30) comprenant deuxrouleaux presseurs (31, 32), dont chacun sert à transporter le matériau en forme de bande (B), interagissant avec le moyen de renvoi (20) et situés et dimensionnés de façon à ce que le matériau en forme de bande (B) peut être transporté en formant des méandres entre le moyen de renvoi (20) et les deux rouleaux presseurs (31, 33) et avec un moyen de renvoi comprenant au moins un rouleau de renvoi (14), **caractérisé en ce qu'**au moins un rouleau de renvoi (14) et/ou qu'un rouleau presseur (31) comprend une armature de support (91) pour plusieurs rouleaux batteurs (90) pouvant être mis en mouvement par une commande rotative.
